(19) 

Europäisches Patentamt

European Patent Office

Office européen des brevets

(11) **EP 4 339 842 A1**

(12) **EUROPEAN PATENT APPLICATION**
published in accordance with Art. 153(4) EPC

(43) Date of publication:
**20.03.2024 Bulletin 2024/12**

(21) Application number: **22806785.6**

(22) Date of filing: **11.05.2022**

(51) International Patent Classification (IPC):
**G06N 3/08** $^{(2023.01)}$

(52) Cooperative Patent Classification (CPC):
**G06N 3/08; H04W 24/02**

(86) International application number:
**PCT/CN2022/092144**

(87) International publication number:
**WO 2022/237822 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2021 CN 202110513732**

(71) Applicant: **Vivo Mobile Communication Co., Ltd. Dongguan, Guangdong 523863 (CN)**

(72) Inventors:
• **SUN, Bule**
  **Dongguan, Guangdong 523863 (CN)**
• **JIANG, Dajie**
  **Dongguan, Guangdong 523863 (CN)**
• **YANG, Ang**
  **Dongguan, Guangdong 523863 (CN)**
• **JI, Zichao**
  **Dongguan, Guangdong 523863 (CN)**

(74) Representative: **Murgitroyd & Company 165-169 Scotland Street Glasgow G5 8PL (GB)**

(54) **TRAINING DATA SET ACQUISITION METHOD, WIRELESS TRANSMISSION METHOD, APPARATUS, AND COMMUNICATION DEVICE**

(57)     This application relates to the field of communications technologies, and discloses a training data set obtaining method and apparatus, a wireless transmission method and apparatus, and a communications device. The training data set obtaining method of embodiments of this application includes: determining, based on degrees of contribution of transmission conditions to an optimization objective of a neural network, data volumes of training data under the transmission conditions; and obtaining, based on the data volumes of the training data under the transmission conditions, the training data under the transmission conditions, to form a training data set for training the neural network, where the degrees of contribution of the transmission conditions to the optimization objective of the neural network represent degrees of impact of the transmission conditions on a value of the optimization objective of the neural network.

FIG. 2

EP 4 339 842 A1

## Description

## CROSS-REFERENCE TO RELATED APPLICATION

This application claims priority to Chinese Patent Application No. 202110513732.0, filed on May 11, 2021 and entitled "TRAINING DATA SET OBTAINING METHOD AND APPARATUS, WIRELESS TRANSMISSION METHOD AND APPARATUS, AND COMMUNICATION DEVICE", which is incorporated herein by reference in its entirety.

## TECHNICAL FIELD

This application relates to the field of communications technologies, and specifically, to a training data set obtaining method and apparatus, a wireless transmission method and apparatus, and a communications device.

## BACKGROUND

Generalization means that a neural network can still obtain a proper output for data not encountered in a training (learning) process. Currently, to implement a generalization capability for a changeable wireless transmission environment, training may be performed based on mixed data to obtain one common neural network, and parameters of the neural network do not need to switch as the environment changes. However, the neural network cannot achieve optimal performance under each transmission condition.

## SUMMARY

Embodiments of this application provide a training data set obtaining method and apparatus, a wireless transmission method and apparatus, and a communications device, to resolve problems such as an insufficient generalization capability of a neural network in existing wireless transmission.

According to a first aspect, a training data set obtaining method is provided. The method includes:

determining, based on degrees of contribution of transmission conditions to an optimization objective of a neural network, data volumes of training data under the transmission conditions; and
obtaining, based on the data volumes of the training data under the transmission conditions, the training data under the transmission conditions, to form a training data set for training the neural network, where
the degrees of contribution of the transmission conditions to the optimization objective of the neural network represent degrees of impact of the transmission conditions on a value of the optimization objective of the neural network.

According to a second aspect, a training data set obtaining apparatus is provided, including:

a first processing module, configured to determine, based on degrees of contribution of transmission conditions to an optimization objective of a neural network, data volumes of training data under the transmission conditions; and
a second processing module, configured to obtain, based on the data volumes of the training data under the transmission conditions, the training data under the transmission conditions, to form a training data set for training the neural network, where
the degrees of contribution of the transmission conditions to the optimization objective of the neural network represent degrees of impact of the transmission conditions on a value of the optimization objective of the neural network.

According to a third aspect, a wireless transmission method is provided. The method includes:

performing an operation of wireless transmission based on a neural network model, to implement the wireless transmission, where
the neural network model is obtained by performing training by using a training data set in advance, and the training data set is obtained based on the training data set obtaining method according to the first aspect.

According to a fourth aspect, a wireless transmission apparatus is provided, including:

a third processing module, configured to perform an operation of wireless transmission based on a neural network model, to implement the wireless transmission, where
the neural network model is obtained by performing training by using a training data set in advance, and the training data set is obtained based on the training data set obtaining method according to the first aspect.

According to a fifth aspect, a communications device is provided. The communications device includes a processor, a memory, and a program or an instruction stored in the memory and executable on the processor, where when the program or the instruction is executed by the processor, the steps of the method according to the first aspect or the steps of the method according to the third aspect are implemented.

According to a sixth aspect, a communications device is provided, including a processor and a communications interface, where the processor is configured to determine, based on degrees of contribution of transmission conditions to an optimization objective of a neural network, data volumes of training data under the transmission conditions; and obtain, based on the data volumes of the training data under the transmission conditions, the training data under the transmission conditions, to form a training data set for training the neural network, where the degrees of contribution of the transmission conditions to the optimization objective of the neural network represent degrees of impact of the transmission conditions on a value of the optimization objective of the neural network.

According to a seventh aspect, a communications device is provided, including a processor and a communications interface, where the processor is configured to perform an operation of wireless transmission based on a neural network model, to implement the wireless transmission, where the neural network model is obtained by performing training by using a training data set in advance, and the training data set is obtained based on the training data set obtaining method according to the first aspect.

According to an eighth aspect, a readable storage medium is provided. The readable storage medium stores a program or an instruction, and when the program or the instruction is executed by a processor, the steps of the method according to the first aspect or the steps of the method according to the third aspect are implemented.

According to a ninth aspect, a chip is provided. The chip includes a processor and a communications interface, the communications interface is coupled to the processor, and the processor is configured to execute a program or an instruction to implement the method according to the first aspect or the method according to the third aspect.

According to a tenth aspect, a computer program/program product is provided. The computer program/program product is stored in a non-transient storage medium, and the program/program product is executed by at least one processor to implement the steps of the training data set obtaining method according to the first aspect or the steps of the wireless transmission method according to the third aspect.

In the embodiments of this application, when a training data set is constructed in a communication system based on artificial intelligence, data under a plurality of transmission conditions is selected in different proportions according to degrees of contribution of data under different transmission conditions to an optimization objective (or referred to as an objective function or a loss function) of a neural network, to construct a mixed training data set, so that a generalization capability of the neural network can be effectively improved.

## BRIEF DESCRIPTION OF THE DRAWINGS

FIG. 1 is a structural diagram of a wireless communication system to which an embodiment of this application is applicable;

FIG. 2 is a schematic flowchart of a training data set obtaining method according to an embodiment of this application;

FIG. 3 is a schematic structural diagram of a training data set obtaining apparatus according to an embodiment of this application;

FIG. 4 is a schematic flowchart of a wireless transmission method according to an embodiment of this application;

FIG. 5 is a schematic flowchart of building a neural network model in a wireless transmission method according to an embodiment of this application;

FIG. 6 is a schematic flowchart of determining proportions of training data in a training data set obtaining method according to an embodiment of this application;

FIG. 7 is a schematic structural diagram of a neural network for DMRS channel estimation in a wireless transmission method according to an embodiment of this application;

FIG. 8 is a schematic structural diagram of a wireless transmission apparatus according to an embodiment of this application;

FIG. 9 is a schematic structural diagram of a communications device according to an embodiment of this application;

FIG. 10 is a schematic diagram of a hardware structure of a terminal according to an embodiment of this application;

FIG. 11 is a schematic diagram of a hardware structure of an access network device according to an embodiment of this application; and

FIG. 12 is a schematic diagram of a hardware structure of a core network device according to an embodiment of this application.

## DETAILED DESCRIPTION

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application fall within the protection scope of this application.

The specification and claims of this application, and terms "first" and "second" are used to distinguish similar objects, but are not used to describe a specific sequence or order. It should be understood that, the terms used in this way is exchangeable in a proper case, so that the embodiments this application can be implemented in another order except those shown or described herein. In addition, objects distinguished by "first" and "second" usually belong to one type, and a quantity of objects is not limited. For example, there may be one or more first objects. In addition, "and/or" in this specification and the claims represents at least one of the connected objects. The character "/" usually indicates an "or" relationship between associated objects.

It should be noted that, the technologies described in the embodiments of this application are not limited to the Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in the embodiments of this application. The described technologies can be applied to the systems and radio technologies mentioned above, and can also be applied to other systems and radio technologies. The following descriptions describe a new radio (New Radio, NR) system for an example purpose, and NR terms are used in most of the following descriptions, but these technologies may also be applied to an application other than the NR system application, such as a 6-th Generation (6-th Generation, 6G) communication system.

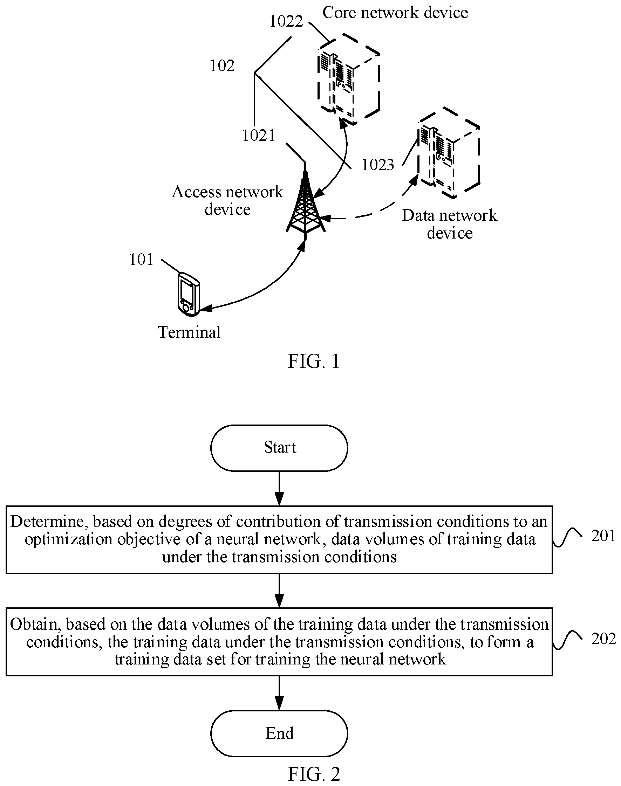

FIG. 1 is a structural diagram of a wireless communication system to which an embodiment of this application is applicable. The wireless communication system includes a terminal 101 and a network side device 102. The terminal 101 may be also referred to as a terminal device or user equipment (User Equipment, UE). The terminal 101 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicle UE (VUE), or a pedestrian UE (PUE). The wearable device includes a smartwatch, a band, a headset, glasses, and the like. It should be noted that the specific type of the terminal 101 is not limited in the embodiments of this application. The network-side device 102 may be an access network device 1021 or a core network device 1022 or a data network (data network, DN) device 1023. The access network device 1021 may also be referred to as a radio access network device or a radio access network (Radio Access Network, RAN). The access network device 1021 may be a base station, a RAN-side node responsible for training a neural network, or the like. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a Wi-Fi node, a transmitting receiving point (Transmitting Receiving Point, TRP), or another proper term in the field. As long as a same technical effect is achieved, the base station is not limited to a specific technical term. It should be noted that only a base station in an NR system is used as an example in the embodiments of this application, but a specific type of the base station is not limited. The core network device 1022 may also be referred to as a core network (Core Network, CN) or a 5G core (5G core, 5GC) network. The core network device 1022 may include but is not limited to at least one of the following: a core network node, a core network function, a mobility management entity (Mobility Management Entity, MME), an access and mobility management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), an application function (Application Function, AF), and the like. It should be noted that only a core network device in a 5G system is used as an example in the embodiments of this application, but the embodiments of this application are not limited thereto. The data network device 1023 may include but is not limited to at least one of the following: a network data analytics function (Network Data Analytics Function, NWDAF), a unified data management (Unified Data Management, UDM), a unified data repository (Unified Data Repository, UDR), and an unstructured data storage function (Unstructured Data Storage Function, UDSF). It should be noted that only a data network device in a 5G system is used as an example in the embodiments of this application, but the embodiments of this application are not limited thereto.

A training data set obtaining method and apparatus, a wireless transmission method and apparatus, and a communications device provided in the embodiments of this application are described in detail below with reference to the accompanying drawings by using some embodiments and application scenarios thereof.

FIG. 2 is a schematic flowchart of a training data set obtaining method according to an embodiment of this application. The method may be performed by a terminal and/or a network-side device. The terminal may be specifically the terminal 101 shown in FIG. 1, and the network-side device may be specifically the network-side device 102 shown in FIG. 1. As shown in FIG. 2, the method includes:

Step 201: Determine, based on degrees of contribution of transmission conditions to an optimization objective of a neural network, data volumes of training data under the transmission conditions.

The degrees of contribution of the transmission conditions to the optimization objective of the neural network represent degrees of impact of the transmission conditions on a value of the optimization objective of the neural network.

It may be understood that, for the transmission conditions oriented to a wireless transmission environment, in this embodiment of this application, the degrees of contribution of the transmission conditions to the optimization objective of the neural network may be determined in advance by testing the degrees of impact of the transmission conditions on the value of the optimization objective of the neural network, that is, by testing degrees of impact of values of the transmission conditions on the value of the optimization objective. Usually, a higher degree of impact indicates a larger value of a degree of contribution of a corresponding transmission condition; otherwise, a lower degree of impact indicates a smaller value of a degree of contribution.

For example, when the optimization objective is expressed as a function of the transmission conditions, if the function is an increasing function about the transmission conditions (for example, a throughput is an SNR increasing function), a transmission condition causing the optimization objective to have a large value has a high degree of contribution; or if the function is a decreasing function about the transmission conditions (for example, an NMSE is an SNR decreasing function), a transmission condition causing the optimization objective to have a small value has a high degree of contribution.

Optionally, for any transmission condition, a degree of contribution of the transmission condition to the optimization objective may be determined based on an achievable optimal value of the optimization objective under the transmission condition. That is to say, a degree of contribution of one given transmission condition to the optimization objective may be measured using a magnitude of an achievable optimal value of the optimization objective under the given transmission condition, and if the achievable optimal value is larger, it indicates that the given transmission condition has a higher degree of impact on the optimization objective, and also has a larger corresponding degree of contribution.

Based on the determined degrees of contribution of the transmission conditions, in this embodiment of this application, the data volumes of the training data corresponding to the transmission conditions may be respectively adjusted based on magnitudes of values of the degrees of contribution corresponding to the transmission conditions, to cause a data volume of training data under each transmission condition to be associated with a degree of contribution of the transmission condition to the optimization objective. The data volumes are reference data volumes of training data that needs to be prepared for the transmission conditions, or are referred to as specified data volumes, and when a training data set is actually obtained, and the training data is prepared for the transmission conditions, reference needs to be made to the data volumes.

It may be understood that, to enable the neural network to have a better generalization capability for various transmission conditions, volumes of data under transmission conditions having high degrees of contribution may be reduced, to reduce degrees of impact of these transmission conditions; and volumes of data under transmission conditions having low degrees of contribution may be increased, to increase degrees of impact of these transmission conditions. That is to say, impact of the transmission conditions on the optimization objective is balanced through data volumes. The data volume may be an absolute value of the data volume, and may also be a relative proportion of the data volume.

The transmission conditions are parameters involved in an actual wireless transmission environment, such as a transmission medium, a transmission signal, and a transmission environment. Optionally, types of the transmission conditions include at least one of the following:

    a signal to noise ratio or a signal to interference plus noise ratio;
    a reference signal received power (Reference Signal Received power, RSRP);
    a signal strength;
    an interference strength;
    a terminal moving speed;
    a channel parameter;
    a distance from a terminal to a base station;
    a cell size;
    a carrier frequency;
    a modulation order or a modulation and coding scheme;
    a cell type;
    an inter-site distance;
    weather and environment factors;
    antenna configuration information of a transmit end or receive end;
    a terminal capability or type; and
    a base station capability or type.

It may be understood that, types of the transmission conditions involved in the embodiments of this application may include but are not limited to one of or a combination of more than one of the types of the transmission conditions listed above.

The interference strength may represent, for example, a strength of an inter-cell co-channel interference, or a magnitude of another interference; the channel parameter is, for example, the number of channel taps (or LOS or NLOS scenario), a delay (or maximum delay), Doppler (or maximum Doppler), an angle of arrival (including horizontal and vertical) range, an angle of departure (including horizontal and vertical) range, or a channel-related coefficient; the cell type is, for example, an indoor cell, an outdoor cell, a macro cell, a micro cell, or a pico cell; the inter-site distance may be, for example, classified into an inter-site distance less than 200 meters, from 200 to 500 meters, or more than 500 meters; the weather and environment factors may be, for example, information such as temperature and/or humidity of a network environment in which training data is located; the antenna configuration information of the transmit end or receive end may be, for example, an antenna quantity and/or an antenna polarization manner; and the UE capability/type may be, for example, Redcap UE and/or normal UE.

Step 202: Obtain, based on the data volumes of the training data under the transmission conditions, the training data under the transmission conditions, to form a training data set for training the neural network.

It may be understood that, in this embodiment of this application, based on the obtained data volumes of the training data under the transmission conditions, that is, based on the obtained reference data volumes, the training data under the transmission conditions is obtained by using the reference data volumes corresponding to the transmission conditions as a reference or setting, to cause the data volumes of the finally obtained training data under the transmission conditions to match the reference or setting. Finally, the obtained training data under the transmission conditions is non-uniformly mixed, to obtain a data set, that is, a training data set, and the training data set may be used to train the foregoing neural network or neural network model in the wireless transmission environment.

Optionally, the obtaining the training data under the transmission conditions, to form a training data set for training the neural network includes: collecting, based on the data volumes of the training data under the transmission conditions, data under the transmission conditions and calibrating the data, to form the training data set under the transmission conditions; or collecting specified volumes of data under the transmission conditions, and selecting, based on the data volumes of the training data under the transmission conditions, partial data from the specified volumes of data and calibrating the partial data, or replenishing the specified volumes of data and calibrating replenished data, to form the training data set under the transmission conditions.

It may be understood that, in this embodiment of this application, when the training data set is constructed according to the determined data volumes of the training data under the transmission conditions, the data volumes required for the transmission conditions may be first calculated, and then data under the transmission conditions is obtained according to the data volumes. Alternatively, a large volume of data under the transmission conditions may be obtained first, that is, a specified volume of data is obtained, then data volumes required for the transmission conditions are calculated, and then selection or replenishment is performed from the foregoing large volume of data obtained in advance.

For the latter case, it is assumed that a total data volume obtained in advance under a k-th transmission condition is $M_k$, and a required data volume determined through calculation is $N_k$. If $M_k \geq N_k$, $N_k$ pieces of data need to be randomly selected from the $M_k$ pieces of data and placed into the training data set. If $M_k < N_k$, $N_k-M_k$ pieces of data need to be obtained, and $N_k$ pieces of data are replenished and then placed into the training data set. The required data volumes are data volumes of the training data under the transmission conditions determined according to the previous step.

After the data under the transmission conditions is obtained, the data needs to be calibrated, that is, a label is added to data under each transmission condition, and the added label is a transmission environment truth value corresponding to the data. For example, in a DMRS channel estimation scenario, a label added to a DMRS signal of data under a transmission condition is a channel truth value corresponding to the DMRS signal.

It should be noted that this embodiment of this application may be applied to any scenario in which functions of one or more modules in the existing wireless transmission network can be replaced with machine learning, that is, when machine learning is used to train the neural network, the training data set may be constructed by using the training data set obtaining method of this embodiment of this application. The application scenario is, for example, pilot design, channel estimation, signal detection, user pairing, HARQ, and positioning at a physical layer, resource allocation, switching, and mobility management at a higher layer, and scheduling or slicing at a network layer. A specific wireless transmission application scenario is not limited in this embodiment of this application.

In this embodiment of this application, when a training data set is constructed in a communication system based on artificial intelligence, data under a plurality of transmission conditions is selected in different proportions according to degrees of contribution of data under different transmission conditions to an optimization objective (or referred to as an objective function or a loss function) of a neural network, to construct a mixed training data set, so that a generalization capability of the neural network can be effectively improved.

Optionally, the determining, based on degrees of contribution of transmission conditions to an optimization objective of a neural network, data volumes of training data under the transmission conditions includes: sorting the degrees of contribution of the transmission conditions; and executing, based on equal-proportion mixing, at least one of operations of reducing a data volume of training data under a transmission condition corresponding to a higher degree of contribution in the sorting and increasing a data volume of training data under a transmission condition corresponding to a lower degree of contribution in the sorting.

It may be understood that, in this embodiment of this application, when the data volumes of the training data under the transmission conditions are determined, degrees of contribution of data under different transmission conditions to the optimization objective (or objective function or loss function) of the neural network during equal-proportion mixing may be first sorted. Then, when the mixed training data set is constructed, a low degree of contribution and a high degree of contribution may be determined based on the foregoing sorting, to further determine a transmission condition with the low degree of contribution and a transmission condition with the high degree of contribution, and based on the premise of ensuring that data under all the transmission conditions is plentiful, a data volume under the transmission condition with the low degree of contribution may be increased, and/or a data volume under the transmission condition with the high degree of contribution may be reduced.

A threshold may be set (that is, a threshold is preset), and a proportion of a data volume under any transmission condition to the total data volume is caused to be not less than the threshold, to satisfy the foregoing "premise of ensuring that data under all the transmission conditions is plentiful".

In this embodiment of this application, by sorting the degrees of contribution of the transmission conditions and adjusting a data volume under a corresponding transmission condition according to the sorting, an adjustment policy on the data volume under the corresponding transmission condition (including whether the data volume needs to be increased or reduced, an increase or reduction amplitude, and the like) can be determined more explicitly and accurately, thereby making the efficiency higher and the result more accurate.

Optionally, the executing at least one of operations of reducing a data volume of training data under a transmission condition corresponding to a higher degree of contribution in the sorting and increasing a data volume of training data under a transmission condition corresponding to a lower degree of contribution in the sorting includes: executing, according to a rule, at least one of operations of reducing a data volume of training data under a transmission condition corresponding to a higher degree of contribution in the sorting and increasing a data volume of training data under a transmission condition corresponding to a lower degree of contribution in the sorting, where the rule includes: that a larger value of the higher degree of contribution indicates a larger amplitude of the reducing; and that a smaller value of the lower degree of contribution indicates a larger amplitude of the increasing.

It may be understood that, in this embodiment of this application, when the data volume under the transmission condition with the low degree of contribution is increased, and the data volume under the transmission condition with the high degree of contribution is reduced, an aim is to gradually reduce the data volumes of the training data under the transmission conditions as the degrees of contribution under the transmission conditions are gradually increased. Therefore, a lower degree of contribution of a transmission condition indicates a larger data volume increased correspondingly under the transmission condition; and a higher degree of contribution of a transmission condition indicates a larger data volume reduced correspondingly under the transmission condition.

In this embodiment of this application, data volumes of training data under corresponding transmission conditions are increased or reduced proportionally according to magnitudes of values of degrees of contribution, so that as the degrees of contribution of the transmission conditions are gradually increased, the data volumes of the training data under the transmission conditions are gradually reduced, thereby better balancing impact of the transmission conditions on the final neural network and better facilitating an improvement in the generalization capability of the neural network.

Optionally, in a case that a result of the sorting is an ascending order, the data volumes of the training data under the transmission conditions decrease in a direction of the sorting; and in a case that a result of the sorting is a descending order, the data volumes of the training data under the transmission conditions increase in the direction of the sorting.

It may be understood that, when the data volumes of the training data under the transmission conditions are determined based on the foregoing embodiment, if a sorting manner of the degrees of contribution is from small to large, proportions of data under corresponding transmission conditions to total data may be in any decrease manner, for example, linear decrease, arithmetic decrease, geometric decrease, exponential function decrease, or power function decrease. Otherwise, if a sorting manner of the degrees of contribution is from large to small, proportions of data under corresponding transmission conditions to total data may be in any increase manner, for example, linear increase, arithmetic increase, geometric increase, exponential function increase, or power function increase.

Optionally, the executing at least one of operations of reducing a data volume of training data under a transmission condition corresponding to a higher degree of contribution in the sorting and increasing a data volume of training data under a transmission condition corresponding to a lower degree of contribution in the sorting includes: determining a reference degree of contribution according to the sorting, and comparing a degree of contribution of a transmission condition with the reference degree of contribution; and

executing at least one of operations according to a comparison result, where the operations include:

determining, if the degree of contribution of the transmission condition is greater than the reference degree of contribution, that the degree of contribution of the transmission condition is the higher degree of contribution, and reducing a data volume of training data under the transmission condition; and
determining, if the degree of contribution of the transmission condition is not greater than the reference degree of contribution, that the degree of contribution of the transmission condition is the lower degree of contribution, and increasing the data volume of the training data under the transmission condition.

It may be understood that, in this embodiment of this application, when the data volumes of the training data under the transmission conditions are adjusted according to the sorting, one intermediate contrast reference quantity of degrees of contribution may be first determined according to the sorting, and is referred to as a reference degree of contribution. Optionally, the reference degree of contribution is a median of the sorting, or a degree of contribution at a specified position in the sorting, or an average of the degrees of contribution in the sorting, or a degree of contribution in the sorting closest to the average. The average may be an arithmetic average, a geometric average, a harmonic average, a weighted average, a square average, an exponential average, or the like.

Then, a degree of contribution of each transmission condition is compared with the reference degree of contribution sequentially. If a degree of contribution of an i-th transmission condition is greater than the reference degree of contribution, the i-th transmission condition is determined as the high degree of contribution in the foregoing embodiment, and a data volume under the i-th transmission condition is reduced; otherwise, if a degree of contribution of an i-th transmission condition is less than a median degree of contribution, the i-th transmission condition is determined as the low degree of contribution in the foregoing embodiment, and a data volume under the i-th transmission condition is increased.

In this embodiment of this application, by determining an intermediate contrast reference quantity of degrees of contribution, it is only necessary to compare another degree of contribution with the contrast reference quantity, to determine according to a comparison result to increase or reduce a data volume under a corresponding transmission condition, so that the algorithm is simple and the operation quantity is small.

Optionally, the determining, based on degrees of contribution of transmission conditions to an optimization objective of a neural network, data volumes of training data under the transmission conditions includes: determining, based on probability densities of the transmission conditions in an actual application, weighting coefficients corresponding to the transmission conditions; and determining, based on the degrees of contribution of the transmission conditions to the optimization objective and with reference to the weighting coefficients, the data volumes of the training data under the transmission conditions.

It may be understood that, when proportions of data under different transmission conditions to the total data volume are determined, weighted terms may be designed based on actual probability densities under the different transmission conditions, a data volume under a condition with a high probability density is increased, and a data volume under a condition with a low probability density is reduced. For example, assuming that a probability density of a $k$-th SNR is $p_k$, a corresponding weighted term is $f(p_k)$, and $f(p_k)$ is an increase function about $p_k$. A data volume of the $k$-th SNR updated by the weighted term is considered as $f(p_k) \cdot N_k$. A probability density is to reflect occurrence probabilities of transmission conditions in different environments. Transmission conditions do not exist with an equal probability in different environments, occurrence probabilities of some transmission conditions are slightly high, and occurrence probabilities of some transmission conditions are slightly low.

Optionally, the weighting coefficients and the probability densities are in a function increasing relationship. That is to say, a relationship between a weighted term and a probability density may be any increase function relationship. That is to say, it is necessary to ensure that a weighted term of a high probability density is large and a weighted term of a low probability density is small.

In this embodiment of this application, designing a weighted term according to an actual probability density of a transmission condition can better adapt to an actual environment.

Optionally, the method further includes: sending the training data set to a target device, where the target device is configured to train the neural network based on the training data set.

It may be understood that, the training data set obtained in this embodiment of this application may be used to train the neural network, and the training data set obtaining method in this embodiment of this application may be applied to a data transmission scenario in which a data collection end and a neural network training end may not be at a same execution end. In this embodiment of this application, a training data set is built after data is collected and calibrated according to the determined proportion of the mixed data set, and the training data set is fed back to another device that needs to execute a neural network training process, that is, a target device. The target device is a second device different from the current device, and may be a terminal or a network-side device, configured to complete training of the neural network model by using the obtained training data set.

In this embodiment of this application, by sending the obtained training data set to the second device different from the current device, data sharing and joint training can be implemented between a plurality of devices, thereby effectively reducing an operation quantity of a single device and effectively improving operation efficiency.

Optionally, the sending the training data set to a target device includes: directly sending the training data set to the target device, or sending the training data set on which specified conversion is performed to the target device, where the specified conversion includes at least one of specific quantization, specific compression, and processing that is performed according to a neural network agreed or configured in advance.

It may be understood that, in this application, when the training data set is sent to another device, a sending manner may be direct sending or indirect sending. The indirect sending means that training data in the training data set is converted and then fed back. For example, to-be-sent training data may be processed and then sent in a specific quantization manner or a specific compression manner or according to a neural network that is agreed or configured in advance.

To further describe technical solutions of the embodiments of this application, description is made below using an example, but the scope that this application claims to protect is not limited.

An application scenario in which the optimization objective (or objective function or loss function) of the neural network is an indicator that needs to be minimized such as a mean square error (mean square error, MSE) or normalized mean square error (normalized mean square error, NMSE) and a transmission condition is a signal to noise ratio (signal to noise ratio, SNR) is used as an example. Given that data under K signal to noise ratios is to be mixed, a total data volume is denoted as $N_{\text{all}}$, a k-th signal to noise ratio is denoted as $SNR_k$, and a data volume under the k-th signal to noise ratio is denoted as $N_k$.

First, the data under the K signal to noise ratios is sorted:

Assuming that the data is mixed at an equal proportion (that is, $N_k/N_{\text{all}}=1/K$), a degree of contribution of data under the k-th SNR to the foregoing indicator that needs to be minimized is denoted as $C_k$. SNRs are sorted in ascending order (or descending order) of $C_k$.

Then, mixing proportions are determined:

(1) For the k-th SNR, $C_k$ is larger, a value of $N_k$ is smaller through adjustment. In ascending order of $C_k$, corresponding values of $N_k$ are from large to small and a decrease rule may be any decrease rule; or in descending order of $C_k$, corresponding values of $N_k$ are from small to large and an increase rule may be any increase rule.

(2) After the data volume is adjusted, it is determined that a proportion of data under any SNR to the total data is not less than a threshold $\gamma$.

That optimized indicators are an MSE and an NMSE is used as an example. Generally, a degree of contribution of data under a low SNR to the MSE or NMSE is large, and a degree of contribution of data under a high SNR to the MSE or NMSE is small. Therefore, in the finally determined mixing proportions, a proportion of data under a low SNR to the total data volume is lowest. As an SNR increases, a corresponding data volume also increases.

Optionally, when proportions of data under different transmission conditions to the total data volume are determined, weighted terms may be designed based on actual probability densities under the different transmission conditions. Assuming that a probability density of a k-th SNR is $p_k$, a corresponding weighted term is $j(p_k)$, and $j(p_k)$ is an increase function about $p_k$. A data volume of the k-th SNR updated by the weighted term is considered as $f(p_k) \cdot N_k$.

In addition, an application scenario in which the optimization objective (or objective function or loss function) of the neural network is an indicator that needs to be minimized such as a signal to interference plus noise ratio (signal to interference plus noise ratio, SINR), a spectral efficiency, or a throughput and a transmission condition is a signal to noise ratio (signal to noise ratio, SNR) is used as an example. Given that data under K SNRs is to be mixed, a total data volume is denoted as $N_{\text{all}}$, a k-th signal to noise ratio is denoted as $SNR_k$, and a data volume under the k-th signal to noise ratio is denoted as $N_k$.

First, the data under the K signal to noise ratios is sorted:

Assuming that the data is mixed at an equal proportion (that is, $N_k/N_{\text{all}}=1/K$), a degree of contribution of data under the k-th SNR to the foregoing indicator that needs to be maximized is denoted as $C_k$. SNRs are sorted in ascending order (or descending order) of $C_k$.

Then, mixing proportions are determined:

(1) For the k-th SNR, $C_k$ is larger, a value of $N_k$ is smaller through adjustment. In ascending order of $C_k$, corresponding values of $N_k$ are from large to small and a decrease rule may be any decrease rule; or in descending order of $C_k$, corresponding values of $N_k$ are from small to large and an increase rule may be any increase rule.

(2) After the data volume is adjusted, it is determined that a proportion of data under any SNR to the total data is not less than a threshold $\gamma$.

That optimized indicators are an SINR, a spectral efficiency, or a throughput is used as an example. Generally, a degree of contribution of data under a low SNR to the SINR, the spectral efficiency, and the throughput is small, and a degree of contribution of data under a high SNR to the SINR, the spectral efficiency, and the throughput is large. Therefore, a proportion of data under a low SNR to the total data volume is highest. As an SNR decreases, a corresponding data volume also decreases.

Optionally, when proportions of data under different transmission conditions to the total data volume are determined, weighted terms may be designed based on actual probability densities under the different transmission conditions. Assuming that a probability density of a k-th SNR is $p_k$, a corresponding weighted term is $f(p_k)$, and $f(p_k)$ is an increase function about $p_k$. A data

volume of the $k$-th SNR updated by the weighted term is considered as $f(p_k) \cdot N_k$.

It should be noted that an execution body of the training data set obtaining method provided in this embodiment of this application may be a training data set obtaining apparatus, or a control module configured to execute the training data set obtaining method in the training data set obtaining apparatus. In the embodiments of this application, a training data set obtaining apparatus provided in the embodiments of this application is described using an example in which a training data set obtaining apparatus executes the training data set obtaining method.

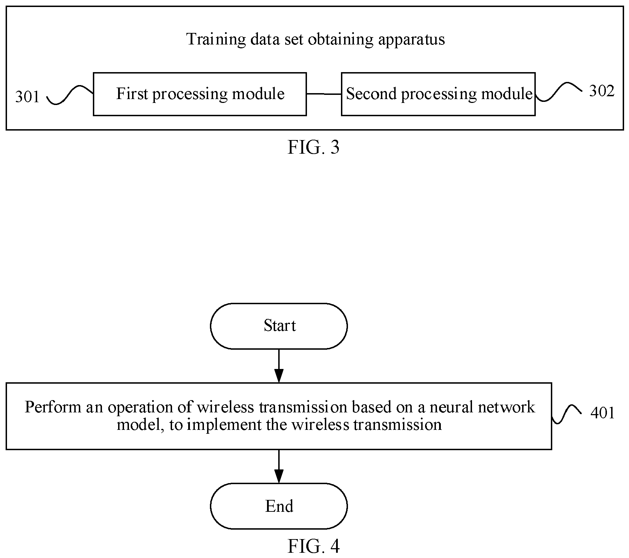

A structure of a training data set obtaining apparatus of an embodiment of this application is shown in FIG. 3, which is a schematic structural diagram of a training data set obtaining apparatus according to an embodiment of this application. The apparatus may be configured to implement training data set obtaining in the foregoing training data set obtaining method embodiments, and the apparatus includes: a first processing module 301 and a second processing module 302.

The first processing module 301 is configured to determine, based on degrees of contribution of transmission conditions to an optimization objective of a neural network, data volumes of training data under the transmission conditions; and

the second processing module 302 is configured to obtain, based on the data volumes of the training data under the transmission conditions, the training data under the transmission conditions, to form a training data set for training the neural network, where

the degrees of contribution of the transmission conditions to the optimization objective of the neural network represent degrees of impact of the transmission conditions on a value of the optimization objective of the neural network.

Optionally, the first processing module is configured to:

sort the degrees of contribution of the transmission conditions; and

execute, based on equal-proportion mixing, at least one of operations of reducing a data volume of training data under a transmission condition corresponding to a higher degree of contribution in the sorting and increasing a data volume of training data under a transmission condition corresponding to a lower degree of contribution in the sorting.

Optionally, types of the transmission conditions include at least one of the following:

a signal to noise ratio or a signal to interference plus noise ratio;

a reference signal received power;

a signal strength;

an interference strength;

a terminal moving speed;

a channel parameter;

a distance from a terminal to a base station;

a cell size;

a carrier frequency;

a modulation order or a modulation and coding scheme;

a cell type;

an inter-site distance;

weather and environment factors;

antenna configuration information of a transmit end or receive end;

a terminal capability or type; and

a base station capability or type.

Optionally, the second processing module is configured to:

collect, based on the data volumes of the training data under the transmission conditions, data under the transmission conditions and calibrate the data, to form the training data set under the transmission conditions; or

collect specified volumes of data under the transmission conditions, and select, based on the data volumes of the training data under the transmission conditions, partial data from the specified volumes of data and calibrating the partial data, or replenish the specified volumes of data and calibrate replenished data, to form the training data set under the transmission conditions.

Optionally, when being configured to execute at least one of operations of reducing a data volume of training data under a transmission condition corresponding to a higher degree of contribution in the sorting and increasing a data volume of training data under a transmission condition corresponding to a lower degree of contribution in the sorting, the first processing module is configured to:

execute, according to a rule, at least one of operations of reducing a data volume of training data under a transmission condition corresponding to a higher degree of contribution in the sorting and increasing a data volume of training data under a transmission condition corresponding to a lower degree of contribution in the sorting, where the rule includes:

that a larger value of the higher degree of contribution indicates a larger amplitude of the reducing; and that a smaller value of the lower degree of contribution indicates a larger amplitude of the increasing.

Optionally, in a case that a result of the sorting is an ascending order, the data volumes of the training data under the transmission conditions decrease in a direction of the sorting; and in a case that a result of the sorting is a descending order, the data volumes of the training data under the transmission conditions increase in the direction of the sorting.

Optionally, when being configured to execute at least one of operations of reducing a data volume of training data under a transmission condition corresponding to a higher degree of contribution in the sorting and increasing a data volume of training data under a transmission condition corresponding to a lower degree of contribution in the sorting, the first processing module is configured to:

> determine a reference degree of contribution according to the sorting, and compare a degree of contribution of a transmission condition with the reference degree of contribution; and
> execute at least one of operations according to a comparison result, where the operations include:
>
>> determining, if the degree of contribution of the transmission condition is greater than the reference degree of contribution, that the degree of contribution of the transmission condition is the higher degree of contribution, and reducing a data volume of training data under the transmission condition; and
>> determining, if the degree of contribution of the transmission condition is not greater than the reference degree of contribution, that the degree of contribution of the transmission condition is the lower degree of contribution, and increasing the data volume of the training data under the transmission condition.

Optionally, the reference degree of contribution is a median of the sorting, or a degree of contribution at a specified position in the sorting, or an average of the degrees of contribution in the sorting, or a degree of contribution in the sorting closest to the average.

Optionally, the first processing module is further configured to:

> determine, based on probability densities of the transmission conditions in an actual application, weighting coefficients corresponding to the transmission conditions; and
> determine, based on the degrees of contribution of the transmission conditions to the optimization objective and with reference to the weighting coefficients, the data volumes of the training data under the transmission conditions.

Optionally, the weighting coefficients and the probability densities are in a function increasing relationship.

Optionally, the apparatus further includes:
a sending module, configured to send the training data set to a target device, where the target device is configured to train the neural network based on the training data set.

Optionally, the sending module is configured to: directly send the training data set to the target device, or send the training data set on which specified conversion is performed to the target device, where the specified conversion includes at least one of specific quantization, specific compression, and processing that is performed according to a neural network agreed or configured in advance.

The training data set obtaining apparatus in this embodiment of this application may be an apparatus, an apparatus with an operating system, or an electronic device, or may be a component, an integrated circuit, or a chip in a terminal or network-side device. The apparatus or electronic device may be a mobile terminal, or may be a non-mobile terminal, or may include but is not limited to the foregoing listed types of the network-side device 102. For example, the mobile terminal may include but is not limited to the foregoing listed types of the terminal 101, and the non-mobile terminal may be a server, a network attached storage (Network Attached Storage, NAS), a personal computer (personal computer, PC), a television (television, TV), a teller machine, or a self-service machine, which is not specifically limited in the embodiments of this application.

The training data set obtaining apparatus provided in this embodiment of this application can implement each process implemented in the method embodiment of FIG. 2, and achieve the same technical effect. To avoid repetition, details are not described herein again.

An embodiment of this application further provides a wireless transmission method. The method may be performed by a terminal and/or a network-side device. The terminal may be specifically the terminal 101 shown in FIG. 1, and the network-side device may be specifically the network-side device 102 shown in FIG. 1. FIG. 4 is a schematic flowchart of a wireless transmission method according to an embodiment of this application. The method includes:

Step 401: Perform an operation of wireless transmission based on a neural network model, to implement the wireless transmission.

The neural network model is obtained by performing training by using a training data set in advance, and the training data set is obtained based on the training data set obtaining method according to the foregoing embodiments.

It may be understood that, in this embodiment of this application, a training data set may be obtained (or proportions of data under transmission conditions may be obtained) according to the foregoing training data set obtaining method embodiments in advance, and the neural network model is obtained by using the training data set to train an initially built neural network. Then, the neural network model is applied to a wireless transmission operation process of this embodiment of this application, and wireless transmission of this embodiment of this application is finally implemented through operations.

A wireless transmission application environment of this embodiment of this application may be applied to any wireless transmission environment in which functions of one or more modules in the existing wireless transmission network can be replaced with machine learning, that is, when machine learning is used in wireless transmission to train the neural network, a training data set may be constructed by using the foregoing training data set obtaining method embodiment of this application, and the neural network model is obtained by performing training by using the training data set and then is used for wireless transmission. The wireless transmission application environment is, for example, pilot design, channel estimation, signal detection, user pairing, HARQ, and positioning at a physical layer, resource allocation, switching, and mobility management at a higher layer, and scheduling or slicing at a network layer. A specific wireless transmission application scenario is not limited in this embodiment of this application.

In this embodiment of this application, data under a plurality of transmission conditions is selected in different proportions according to degrees of contribution of data under different transmission conditions to an optimization objective (or referred to as an objective function or a loss function) of a neural network, to construct a non-uniformly mixed training data set, and training is performed based on the non-uniformly mixed training data set, to obtain one common neural network that is used for actual wireless transmission under different transmission conditions, so that the neural network obtained through training can achieve higher performance under each transmission condition.

Optionally, before the performing an operation of wireless transmission based on a neural network model, the wireless transmission method further includes: performing, based on the training data set in any one of training manners, training to obtain the neural network model, where the training manners include:

centralized training of a single terminal;
centralized training of a single network-side device;
joint distributed training of a plurality of terminals;
joint distributed training of a plurality of network-side devices;
joint distributed training of a single network-side device and a plurality of terminals;
joint distributed training of a plurality of network-side devices and a plurality of terminals; and
joint distributed training of a plurality of network-side devices and a single terminal.

It may be understood that, before a wireless transmission operation is performed by using a neural network model, training needs to be first performed by using a training data set to obtain the neural network model. Specifically, a training stage of the neural network may be offline performed, and an execution body may be a network-side device, or a terminal-side device, or a network-side device and terminal-side device combination. Optionally, the network-side device is an access network device, a core network device, or a data network device. That is to say, the network-side device in this embodiment of this application may include one or more of a network-side device in an access network, a core network device, and a data network device (data network, DN). The network-side device in the access network may be a base station, or a node responsible for AI training on a RAN side, or is not limited to the type of the access network device 1021 listed in FIG. 1. The core network device is not limited to the type of the core network device 1022 listed in FIG. 1, and the data network device may be a NWDAF, a UDM, a UDR, a UDSF, or the like.

When the execution body is a network-side device, the training may be centralized training based on a single network-side device, or may be distributed training (for example, federated learning) based on a plurality of network-side devices. When the execution body is a terminal-side device, the training may be centralized training based on a single terminal, or may be distributed training (for example, federated learning) based on a plurality of terminals. When the execution body is a network-side device and terminal-side device combination, a single network-side device may be combined with a plurality of terminal devices, or a single terminal device may be combined with a plurality of network-side devices, or a plurality of network-side devices may be combined with a plurality of terminal-side devices. The execution body of the training process is not specifically limited in this application.

Optionally, the wireless transmission method further includes: sharing, in a process of the distributed training, proportions of the training data under the transmission conditions between bodies executing the distributed training.

It may be understood that, in this embodiment of this application, when the neural network model is trained by using a plurality of network-side devices, or a plurality of terminal devices, or a network-side device and terminal device combination, proportions of training data under a set of transmission conditions are shared between execution devices.

In this embodiment of this application, by share proportions of training data between execution bodies, the execution bodies can train the neural network model without sharing their own data, so that a problem that a single device has an insufficient calculation capability or training capability, or data cannot be shared between devices (related to a privacy problem), or cost of transmitting a large volume of data is very large can be resolved.

Optionally, in a case that the distributed training is joint distributed training of a plurality of network-side devices, any network-side device of the plurality of network-side devices performs calculation to determine the proportions of the training data under the transmission conditions, and sends the proportions to other network-side devices different from the any network-side device of the plurality of network-side devices through a first specified type of interface signaling.

It may be understood that, when a combination of a plurality of network-side devices performs distributed training on the neural network model, all the network-side devices share a same data proportion. In addition, one network-side device of the plurality of network-side devices may perform calculation to obtain proportions of training data under the transmission conditions, and share the proportions to other network-side devices of the plurality of network-side devices through network-side interface signaling. The network-side interface signaling is of a first specified type that is preset. Optionally, the first specified type of interface signaling includes Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, or N22 interface signaling. Data proportion sharing may be implemented between base stations through Xn interface signaling by using an Xn interface, and data proportion sharing may be implemented between core network devices through a corresponding type of interface signaling by using an N1, N2, N3, N4, N5, N6, N7, N8, N9, N10, N11, N12, N13, N14, N15, or N22 interface between the core network devices.

For example, one network-side device may perform calculation to determine data proportion information, and then share the data proportion information to other network-side devices through (including but not limited to) the Xn interface signaling.

Optionally, in a case that the distributed training is joint distributed training of a plurality of terminals, any terminal of the plurality of terminals performs calculation to determine the proportions of the training data under the transmission conditions, and sends the proportions to other terminals different from the any terminal of the plurality of terminals through a second specified type of interface signaling.

It may be understood that, when a combination of a plurality of terminals performs distributed training on the neural network model, all the terminals share a same data proportion. In addition, one terminal of the plurality of terminals may perform calculation to obtain proportions of training data under the transmission conditions, and share the proportions to other terminals of the plurality of terminals through terminal interface signaling. The terminal interface signaling is of a second specified type that is preset. Optionally, the second specified type of interface signaling includes PC5 interface signaling or sidelink interface signaling.

For example, one terminal device performs calculation to determine data proportion information, and then shares the data proportion information to other terminal devices through (including but not limited to) the PC5 interface signaling.

Optionally, in a case that the distributed training is joint distributed training of network-side device(s) and terminal(s), any network-side device or any terminal of the network-side device(s) and the terminal(s) performs calculation to determine the proportions of the training data under the transmission conditions, and sends the proportions to other network-side devices or terminals different from the any network-side device or the any terminal of the network-side device(s) and the terminal(s) through a third specified type of signaling.

It may be understood that, when the execution body is a network-side device and terminal-side device combination, all devices share a same data proportion. In addition, one terminal (or network-side device) in the network-side device and terminal-side device combination may perform calculation to obtain proportions of training data under the transmission conditions, and share the proportions to other devices of the network-side device and terminal-side device combination through a specified type of interface signaling. The specified type of interface signaling is a third specified type of interface signaling that is preset.

Optionally, the third specified type of signaling includes radio resource control (RRC), physical downlink control channel (PDCCH) layer-1 signaling, physical downlink shared channel (PDSCH), medium access control control element (MAC CE), system information block (SIB), Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, N22 interface signaling, physical uplink control channel (PUCCH) layer-1 signaling, physical uplink shared channel (PUSCH), physical random access channel's message1 (PRACH's MSG1), PRACH's MSG3, PRACH's MSG A, PC5 interface signaling, or sidelink interface signaling.

That is to say, between a plurality of network-side devices and terminal-side devices participating in training, data proportion information may be shared through signaling (including but not limited to) such as RRC, PDCCH layer-1 signaling, PDSCH, MAC CE, SIB, Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, N22 interface signaling, PUCCH layer-1 signaling, PUSCH, PRACH's MSG1, PRACH's MSG3, PRACH's MSG A, PC5 interface signaling, or sidelink interface signaling.

Optionally, the method further includes: obtaining real-time data under the transmission conditions and adjusting a trained neural network model online based on the real-time data.

It may be understood that, in this embodiment of this application, a network is pre-trained based on a large volume of data collected offline according to the foregoing embodiments, to make the network convergent, and then fine-tuning (also referred to as fine-tuning) is performed on parameters of the pre-trained neural network by using online data of the transmission environment collected in real time, so that the neural network adapts to the actual environment. The fine-tuning may be considered as a training process performed by using the parameters of the pre-trained neural network as initialization. Parameters of some layers may be frozen at a fine-tuning stage. Generally, layers close to an input end are frozen, and layers close to an output end are activated. In this way, it can be ensured that the network still can be convergent. If the data volume at the fine-tuning stage is smaller, it is suggested that more layers are frozen, and fine-tuning is performed on only a few layers close to the output end.

Optionally, when the trained neural network is taken to an actual wireless environment and is subject to fine-tuning or fine-tuning, mixing proportions of data under different transmission conditions at a model training stage may continue to be used. Alternatively, when the trained neural network is taken to an actual wireless environment and is subject to fine-tuning, fine-tuning may be performed directly by using data generated in an actual wireless environment without controlling a data proportion.

In this embodiment of this application, based on completing offline training of the neural network model, online fine-tuning is performed on the trained neural network model, so that the neural network can better adapt to an actual environment.

Optionally, the obtaining real-time data under the transmission conditions and adjusting a trained neural network model online based on the real-time data includes: obtaining the real-time data under the transmission conditions based on the proportions of the training data under the transmission conditions; and skipping, if a proportion of real-time data under any transmission condition of the transmission conditions is greater than a proportion of training data under the any transmission condition, inputting data that is in the real-time data under the any transmission condition and whose proportion is the proportion of the real-time data minus the proportion of the training data under the any transmission condition into the trained neural network model in a process of adjusting the trained neural network model online.

It may be understood that, according to the foregoing embodiments, when the trained neural network model is taken to an actual wireless environment and is subject to fine-tuning or fine-tuning, mixing proportions of data under different transmission conditions at a model training stage may continue to be used. That is to say, proportions or data volumes of real-time data under the transmission conditions at an online fine-tuning stage are determined according to the proportions of the training data under the transmission conditions at the training stage, and corresponding volumes of real-time data under the transmission conditions are obtained according to the proportions or data volumes of the real-time data. When the mixing proportions at the training stage continue to be used, and when a proportion of data under a transmission condition from an actual wireless environment exceeds a proportion under the transmission condition at the model training stage, surplus data is not input into the network to perform fine-tuning.

In this embodiment of this application, when the data proportion at the training stage continues to be used, data under the transmission condition exceeding the proportion is not input into the neural network model to perform fine-tuning, so that unbalanced impact of a data volume exceeding the proportion can be avoided.

Optionally, the obtaining the real-time data under the transmission conditions includes: collecting data of at least one of a network-side device and a terminal under the transmission conditions online as the real-time data under the transmission conditions; and the adjusting the trained neural network model online includes: adjusting, based on the data of the at least one of the network-side device and the terminal under the transmission conditions, the trained neural network model online through the network-side device or the terminal.

It may be understood that, similar to the training stage of the neural network, at the fine-tuning or fine-tuning stage of the neural network model in this embodiment of this application, if the data proportion at the training stage continues to be used, the execution body may alternatively be a network-side device and/or terminal-side device at the input end of the neural network. That is to say, when an execution body is a network-side device, real-time data of the network-side device under the transmission conditions may be online obtained; when an execution body is a terminal device, real-time data of the terminal side under the transmission conditions may be online obtained; and when execution bodies not only include a network-side device but also include a terminal, real-time data under the transmission conditions needs to be obtained for the two execution bodies.

Then, during actual online fine-tuning, the network-side device or terminal performs online fine-tuning on the neural network model according to its own corresponding real-time data, to update network parameters.

Optionally, in a case that the network-side device or the terminal does not obtain the proportions of the training data under the transmission conditions at a training stage, before the obtaining the real-time data under the transmission conditions based on the proportions of the training data under the transmission conditions, the wireless transmission method further includes:

obtaining, by the network-side device, the proportions of the training data under the transmission conditions from a network-side device at the training stage through any interface signaling of Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling; or

obtaining, by the network-side device, the proportions of the training data under the transmission conditions from a terminal at the training stage through any signaling of PUCCH layer-1 signaling, PUSCH, PRACH's MSG1, PRACH's MSG3, and PRACH's MSG A; or

obtaining, by the terminal, the proportions of the training data under the transmission conditions from a terminal at the training stage through PC5 interface signaling or sidelink interface signaling; or

obtaining, by the terminal, the proportions of the training data under the transmission conditions from a network-side device at the training stage through any signaling of RRC, PDCCH layer-1 signaling, PUSCH, MAC CE, and SIB.

It may be understood that, at the online fine-tuning stage of the neural network model, if an execution body does not obtain data proportion information at the training stage, the execution body needs to first obtain, according to different execution body types and a target execution body type oriented to the training stage, the data proportion information through (including but not limited to) Xn interface signaling, or interface signaling such as Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling, or PC5 interface signaling, or sidelink interface signaling, or interface signaling such as RRC, PDCCH layer-1 signaling, MAC CE, or SIB, and then perform fine-tuning or fine-tuning.

In this embodiment of this application, based on a case that an execution body does not obtain data proportion information at the training stage, the data proportion information is obtained from another execution body through a specified type of interface signaling, so that the data proportion information can be shared at the online fine-tuning stage, to ensure the generalization capability of the neural network.

To further describe technical solutions of the embodiments of this application, description is made below using an example, but the scope that this application claims to protect is not limited.

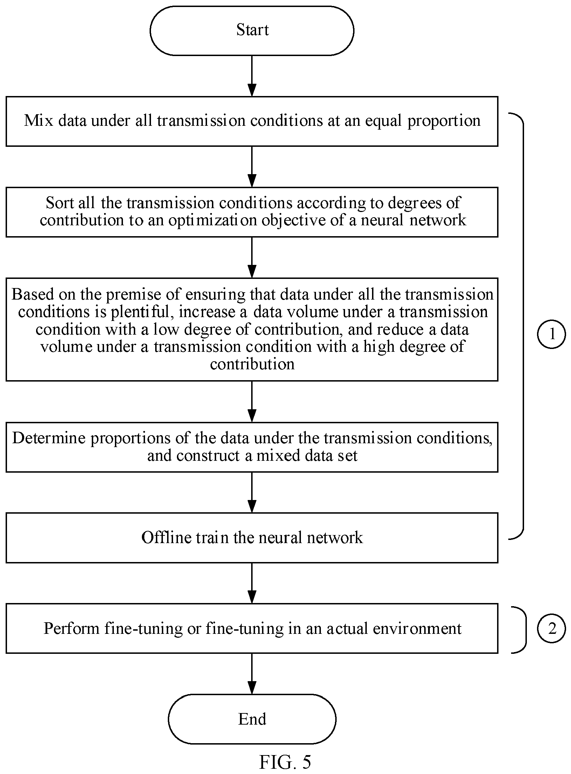

FIG. 5 is a schematic flowchart of building a neural network model in a wireless transmission method according to an embodiment of this application. A model building process related to the wireless transmission method provided in this embodiment of this application is shown in FIG. 5, and may be divided into an offline (offline) training stage (a part shown by ① in the figure) and a fine-tuning or fine-tuning stage (a part shown by ② in the figure) in an actual transmission network, where before offline training, a training data set may be first constructed and obtained.

When the training data set is constructed and obtained, data under all transmission conditions may be first mixed at an equal proportion, to determine data volumes or data proportions under the transmission conditions at the equal proportion. Then, all the transmission conditions in the mixing are sorted according to degrees of contribution to an optimization objective of a neural network. Then, based on the premise of ensuring that data under all the transmission conditions is plentiful, a data volume under a transmission condition with a low degree of contribution is increased, and a data volume under a transmission condition with a high degree of contribution is reduced, to determine proportions of data under the transmission conditions, and further construct a mixed training data set according to the proportions.

When data volumes under different transmission conditions are determined, "ensuring that data under all the transmission conditions is plentiful" may mean that one threshold is set, and a proportion of a data volume under any transmission condition to a total data volume is not less than the threshold.

When "the data volume under the transmission condition with the low degree of contribution is increased, and the data volume under the transmission condition with the high degree of contribution is reduced", a lower degree of contribution indicates a larger data volume increased, and a higher degree of contribution indicates a larger data volume reduced. If a sorting manner of the degrees of contribution is from small to large when the degrees of contribution are sorted, proportions (that is, proportions) of data under corresponding transmission conditions to total data may be in any decrease manner, for example, linear decrease, arithmetic decrease, geometric decrease, exponential function decrease, or power function decrease. Otherwise, if a sorting manner of the degrees of contribution is from large to small, proportions of data under corresponding transmission conditions to total data may be in any increase manner, for example, linear increase, arithmetic increase, geometric increase, exponential function increase, or power function increase.

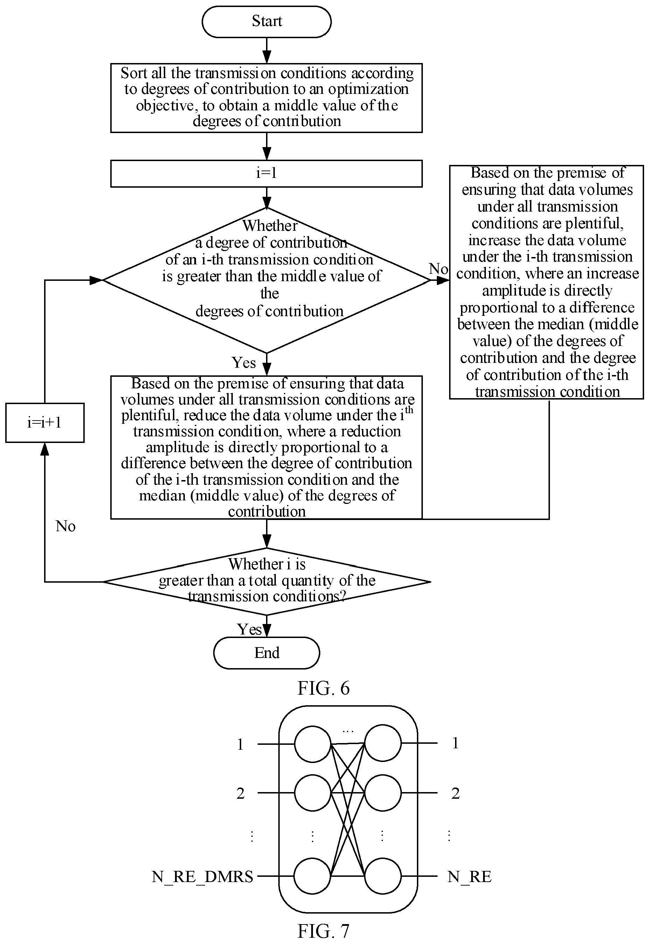

A feasible implementation of determining proportions of data under transmission conditions is shown in FIG. 6, which is a schematic flowchart of determining proportions of training data in a training data set obtaining method according to an embodiment of this application, mainly including:

A median (middle value) of degrees of contribution is found after sorting, and a degree of contribution of each transmission condition is compared with the median sequentially.

If a degree of contribution of an i-th transmission condition is greater than the median of the degrees of contribution, based on the premise of ensuring that data volumes under all transmission conditions are plentiful, the data volume under the i-th transmission condition is reduced, where a reduction amplitude is directly proportional to a difference between the degree of contribution of the i-th transmission condition and the median (middle value) of the degrees of contribution; and

if the degree of contribution of the i-th transmission condition is less than the median of the degrees of contribution, based on the premise of ensuring that data volumes under all transmission conditions are plentiful, the data volume under the i-th transmission condition is increased, where an increase amplitude is directly proportional to a difference between the median (middle value) of the degrees of contribution and the degree of contribution of the i-th transmission condition.

After a training data set is obtained, using the training data set, a neural network model is trained cyclically and iteratively offline and is made convergent, to obtain a trained neural network model.

Then, data in an actual wireless network is collected in real time, and fine-tuning (fine-tuning) is performed on parameters of the pre-trained neural network model, so that the neural network model can adapt to an actual environment. Online fine-tuning may be considered as a retraining process performed by using the parameters of the pre-trained neural network as initialization.

For example, a specific application scenario is channel estimation of a demodulation reference signal (Demodulation Reference Signal, DMRS) in wireless transmission, one system including N_RB RBs is considered, and each RB includes N_SC subcarriers and N_Sym symbols. That is to say, the system includes a total of N_RE=N_RB*N_SC*N_Sym time frequency resources. N_SC_DMRS DMRSs and N_Sym_DMRS DMRSs are respectively placed in a frequency domain and a time domain of each RB, and are used for channel estimation. That is to say, the DMRSs occupy a total of N_RE_DMRS =N_RB*N_SC_DMRS *N_Sym_DMRS time frequency resources. A receiving end restores, based on received DMRS signals in positions of the N_RE_DMRS time frequency resources, channel estimation on all the N_RE time frequency resources.

A structure of a neural network for implementing the foregoing process is shown in FIG. 7, which is a schematic structural diagram of a neural network for DMRS channel estimation in a wireless transmission method according to an embodiment of this application, where Input information of the neural network is N_RE_DMRS symbols obtained after DMRSs pass through a channel plus noise, and output information of the neural network is N_RE symbols, to correspond to a channel estimation result on all N_RE time frequency resources.

When the neural network is trained, training data is a labeled DMRS information pair, that is, one DMRS signal sample (including N_RE_DMRS symbols) corresponds to one label (the label is a channel truth value corresponding to the current DMRS signal sample, and has a total of N_RE_DMRS symbols). During training, a large quantity of labeled DMRS information pairs are used to adjust parameters of the neural network, to minimize a normalized mean square error NMSE between an output of the neural network based on a DMRS signal sample and a label thereof.

Given that the training data includes DMRS information pairs obtained under $K$ SNRs, a $k$-th signal to noise ratio is denoted as $SNR_k$, and a data volume under the $k$-th signal to noise ratio is $N_k$, including a total of

$$N_{all} = \sum_{k=0}^{K} N_k$$ pieces of training data. Assuming that the neural network is trained based on federated learning, one network-side device and a plurality of terminal-side devices participate in federated learning.

First, a proportion of data under each SNR during construction of a mixed training data set is determined on the network-side device.

(1) According to degrees of contribution of transmission conditions to the optimization objective, data under the $K$ signal to noise ratios is sorted:
Assuming that the data is mixed at an equal proportion (that is, $N_k/N_{all}$=1/$K$), a degree of contribution of data under the $k$-th SNR to the foregoing NMSE is denoted as $C_k$. SNRs are sorted in ascending order (or descending order) of $C_k$. In this embodiment, a degree of contribution of data under a low SNR to the NMSE is large, and a degree of contribution of data under a high SNR to the NMSE is small. A median of all the degrees of contribution in the sorting is denoted as $\overline{C}$.

(2) Mixing proportions are determined:

1) For the $k$-th SNR: If $C_k \geq \overline{C}$, the data volume under the $k$-th SNR is reduced, and a reduction amplitude is directly proportional to ($C_k$-$\overline{C}$); and if $C_k \leq \overline{C}$, the data volume under the $k$-th SNR is increased, and an increase amplitude is directly proportional to ($\overline{C}$-$C_k$).

2) Assuming that the adjusted data volume under the $k$-th signal to noise ratio is $N'_k$ , there are a total of $N'_{all} = \sum_{k=0}^{K} N'_k$ pieces of training data. It is determined after the adjustment that a proportion of data under any SNR to the total data is not less than a threshold $\gamma$. That is to say, for all $k$, after the data volume is adjusted,

$$N'_k / N'_{all} \geq \gamma.$$

Then, the network-side device sends, through interface signaling such as RRC, PDCCH layer-1 signaling, MAC CE, or SIB, data proportion information under each SNR to all terminals participating in joint training, to perform federated learning of the neural network, that is, offline training.

After the offline training of the neural network is completed, online fine-tuning is performed on the trained neural network in an actual wireless network. Because data proportion information is shared to all the terminals at the offline training stage, the data proportion may continue to be used at the online fine-tuning stage. When a proportion of data under an SNR from an actual wireless environment exceeds a proportion under the SNR at the model training stage, surplus data is not input into the neural network to perform fine-tuning.

This embodiment of this application can improve the generalization capability of the neural network model obtained through training in a changing wireless environment.

It should be noted that an execution body of the wireless transmission method provided in this embodiment of this application may be a wireless transmission apparatus, or a control module configured to execute the wireless transmission method in the wireless transmission apparatus. In the embodiments of this application, a wireless transmission apparatus provided in the embodiments of this application is described using an example in which a wireless transmission apparatus executes the wireless transmission method.

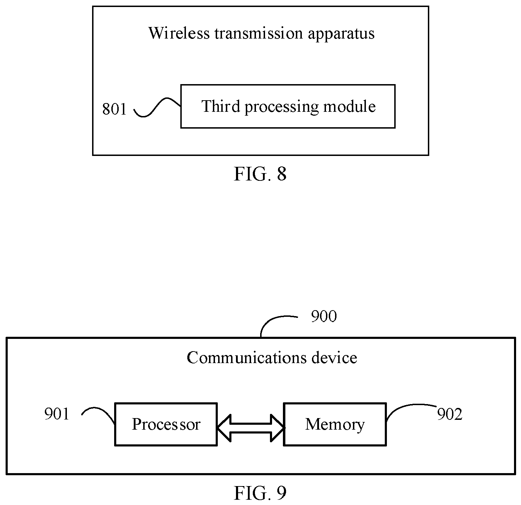

A structure of a wireless transmission apparatus of an embodiment of this application is shown in FIG. 8, which is a schematic structural diagram of a wireless transmission apparatus according to an embodiment of this application. The apparatus may be configured to implement wireless transmission in the foregoing wireless transmission method embodiments, and the apparatus includes:

a third processing module 801, configured to perform an operation of wireless transmission based on a neural network model, to implement the wireless transmission.

The neural network model is obtained by performing training by using a training data set in advance, and the training data set is obtained based on the training data set obtaining method according to the foregoing embodiments.

Optionally, the wireless transmission apparatus further includes:

a training module, configured to perform, based on the training data set in any one of training manners, training to obtain the neural network model, where the training manners include:

centralized training of a single terminal;
centralized training of a single network-side device;
joint distributed training of a plurality of terminals;
joint distributed training of a plurality of network-side devices;
joint distributed training of a single network-side device and a plurality of terminals;
joint distributed training of a plurality of network-side devices and a plurality of terminals; and
joint distributed training of a plurality of network-side devices and a single terminal.

Optionally, the network-side device is an access network device, a core network device, or a data network device.

Optionally, the wireless transmission apparatus further includes:

a fourth processing module, configured to share, in a process of the distributed training, proportions of the training data under the transmission conditions between bodies executing the distributed training.

Optionally, in a case that the distributed training is joint distributed training of a plurality of network-side devices, the fourth processing module is configured by any network-side device of the plurality of network-side devices to perform calculation to determine the proportions of the training data under the transmission conditions, and send the proportions to other network-side devices different from the any network-side device of the plurality of network-side devices through a first specified type of interface signaling.

Optionally, the first specified type of interface signaling includes Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, or N22 interface signaling.

Optionally, in a case that the distributed training is joint distributed training of a plurality of terminals, the fourth processing module is configured by any terminal of the plurality of terminals to perform calculation to determine the proportions of the training data under the transmission conditions, and send the proportions to other terminals different from the any terminal of the plurality of terminals through a second specified type of interface signaling.

Optionally, the second specified type of interface signaling includes PC5 interface signaling or sidelink interface signaling.

Optionally, in a case that the distributed training is joint distributed training of network-side device(s) and terminal(s), the fourth processing module is configured by any network-side device or any terminal of the network-side device(s) and the terminal(s) to perform calculation to determine the proportions of the training data under the transmission conditions, and send the proportions to other network-side devices or terminals different from the any network-side device or the any terminal of the network-side device(s) and the terminal(s) through a third specified type of signaling.

Optionally, the third specified type of signaling includes RRC, PDCCH layer-1 signaling, PDSCH, MAC CE, SIB, Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, N22 interface signaling, PUCCH layer-1 signaling, PUSCH, PRACH's MSG1, PRACH's MSG3, PRACH's MSG A, PC5 interface signaling, or sidelink interface signaling.

Optionally, the wireless transmission apparatus further includes:

a fine-tuning module, configured to obtain real-time data under the transmission conditions and adjust a trained neural network model online based on the real-time data.

Optionally, the fine-tuning module is configured to:

obtain the real-time data under the transmission conditions based on the proportions of the training data under the transmission conditions; and

skip, if a proportion of real-time data under any transmission condition of the transmission conditions is greater than a proportion of training data under the any transmission condition, inputting data that is in the real-time data under the any transmission condition and whose proportion is the proportion of the real-time data minus the proportion of the training data under the any transmission condition into the trained neural network model in a process of adjusting the trained neural network model online.

Optionally, when being configured to obtain the real-time data under the transmission conditions, the fine-tuning module is configured to:

collect data of at least one of a network-side device and a terminal under the transmission conditions online as the real-time data under the transmission conditions; and

when being configured to adjust the trained neural network model online, the fine-tuning module is configured to:

adjust, based on the data of the at least one of the network-side device and the terminal under the transmission conditions, the trained neural network model online through the network-side device or the terminal.

Optionally, the wireless transmission apparatus further includes:

a communication module, configured, in a case that the network-side device or the terminal does not obtain the proportions of the training data under the transmission conditions at a training stage,

by the network-side device, to obtain the proportions of the training data under the transmission conditions from a network-side device at the training stage through any interface signaling of Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling; or

by the network-side device, to obtain the proportions of the training data under the transmission conditions from a terminal at the training stage through any signaling of PUCCH layer-1 signaling, PUSCH, PRACH's MSG1, PRACH's MSG3, and PRACH's MSG A; or

by the terminal, to obtain the proportions of the training data under the transmission conditions from a terminal at the training stage through PC5 interface signaling or sidelink interface signaling; or

by the terminal, to obtain the proportions of the training data under the transmission conditions from a network-side device at the training stage through any signaling of RRC, PDCCH layer-1 signaling, PUSCH, MAC CE, and SIB.

The wireless transmission apparatus in this embodiment of this application may be an apparatus, an apparatus with an operating system, or an electronic device, or may be a component, an integrated circuit, or a chip in a terminal or network-side device. The apparatus or electronic device may be a mobile terminal, or may be a non-mobile terminal, or may include but is not limited to the foregoing listed types of the network-side device 102. For example, the mobile terminal may include but is not limited to the foregoing listed types of the terminal 101, and the non-mobile terminal may be a server, a network attached storage (Network Attached Storage, NAS), a personal computer (personal computer, PC), a television (television, TV), a teller machine, or a self-service machine, which is not specifically limited in the embodiments of this application.

The wireless transmission apparatus in the embodiments of this application may be an apparatus with an operating system. The operating system may be an Android (Android) operating system, may be an iOS operating system, or may be another possible operating system, and is not specifically limited in the embodiments of this application.

The wireless transmission apparatus provided in this embodiment of this application can implement each process implemented in the wireless transmission method embodiments of FIG. 4 to FIG. 7, and achieve the same technical effect. To avoid repetition, details are not described herein again.

As shown in FIG. 9, an embodiment of this application further provides a communications device 900, including a processor 901, a memory 902, and a program or an instruction stored in the memory 902 and executable on the processor 901. For example, when the communications device 900 is a terminal or a network-side device, and the program or the instruction is executed by the processor 901, each process of the foregoing training data set obtaining method embodiment is implemented and the same technical effect can be achieved, or each process of the foregoing wireless transmission method embodiment is implemented and the same technical effect can be achieved. To avoid repetition, details are not described herein again.

An embodiment of this application further provides a communications device. The communications device may be a terminal or a network-side device. The communications device includes a processor and a communications interface, where the processor is configured to determine, based on degrees of contribution of transmission conditions to an optimization objective of a neural network, data volumes of training data under the transmission conditions; and obtain, based on the data volumes of the training data under the transmission conditions, the training data under the transmission conditions, to form a training data set for training the neural network, where the degrees of contribution of the transmission conditions to the optimization objective of the neural network represent degrees of impact of the transmission conditions on a value of the optimization objective of the neural network. It should be noted that the communications device embodiment corresponds to the foregoing training data set obtaining method embodiment, and each implementation process and implementation manner of the foregoing network side device embodiment is applicable to the communications device embodiment, and can achieve the same technical effect.

An embodiment of this application further provides a communications device. The communications device may be a terminal or a network-side device. The communications device includes a processor and a communications interface, where the processor is configured to perform an operation of wireless transmission based on a neural network model, to implement the wireless transmission, where the neural network model is obtained by performing training by using a training data set in advance, and the training data set is obtained based on the training data set obtaining method according to the foregoing embodiments. It should be noted that the communications device embodiment corresponds to the foregoing wireless transmission method embodiment, and each implementation process and implementation manner of the foregoing network side device embodiment is applicable to the communications device embodiment, and can achieve the same technical effect.

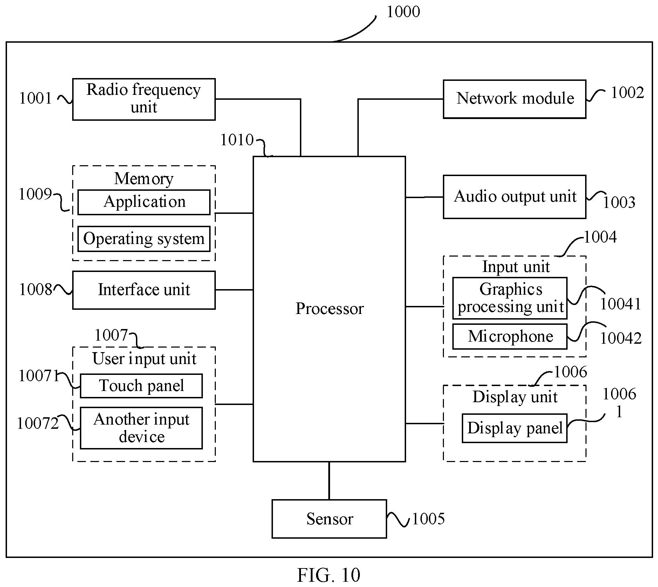

Specifically, FIG. 10 is a schematic diagram of a hardware structure of a terminal according to an embodiment of this application. The terminal 1000 includes, but is not limited to, at least some components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that, the terminal 1000 may further include a power supply (such as a battery) for supplying power to the components. The power supply may be logically connected to the processor 1010 by using a power management system, thereby implementing functions such as charging, discharging, and power consumption management by using the power management system. A terminal structure shown in FIG. 10 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition device (for example, a camera) in a video acquisition mode or an image acquisition mode. The display unit 1006 may include a display panel 10061, for example, a display panel 10061 configured in a form such as a liquid crystal display or an organic light-emitting diode. The user input unit 1007 includes a touch panel 10071 and another input device 10072. The touch panel 10071 is also referred to as a touchscreen The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which are not described herein in detail.

In this embodiment of this application, the radio frequency unit 1001 receives downlink data from a network side device, and then delivers the downlink data to the processor 1010 for processing; and in addition, sends uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instruction and various data. The memory 1009 may mainly include a program or instruction storage area and a data storage area. The program or instruction storage region may store an operating system, an application or instruction required by at least one function (for example, a voice playing function or an image playing function), and the like. In addition, the memory 1009 may include a high-speed random access memory, or may further include a non-volatile memory, or the like. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the nonvolatile memory is at least one magnetic disk storage device, a flash memory device, or other non-volatile solid-state storage devices. Volatile memories may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 1009 in this embodiment of this application includes but is not limited to these memories and any other suitable types of memories.

The processor 1010 may include one or more processing units. Optionally, the processor 1010 may integrate an application processor and a modem processor. The application processor mainly processes an operating system, a user interface, an application or instruction, and the like. The modem processor mainly processes wireless communication, and is, for example, a baseband processor. It may be understood that the foregoing modem processor may not be integrated into the processor 1010.

The processor 1010 is configured to determine, based on degrees of contribution of transmission conditions to an optimization objective of a neural network, data volumes of training data under the transmission conditions; and obtain, based on the data volumes of the training data under the transmission conditions, the training data under the transmission conditions, to form a training data set for training the neural network, where the degrees of contribution of the transmission conditions to the optimization objective of the neural network represent degrees of impact of the transmission conditions on a value of the optimization objective of the neural network.

In this embodiment of this application, when a training data set is constructed in a communication system based on artificial intelligence, data under a plurality of transmission conditions is selected in different proportions according to degrees of contribution of data under different transmission conditions to an optimization objective (or referred to as an objective function or a loss function) of a neural network, to construct a mixed training data set, so that a generalization capability of the neural network can be effectively improved.

Optionally, the processor 1010 is further configured to sort the degrees of contribution of the transmission conditions; and execute, based on equal-proportion mixing, at least one of operations of reducing a data volume of training data under a transmission condition corresponding to a higher degree of contribution in the sorting and increasing a data volume of training data under a transmission condition corresponding to a lower degree of contribution in the sorting.

In this embodiment of this application, by sorting the degrees of contribution of the transmission conditions and adjusting a data volume under a corresponding transmission condition according to the sorting, an adjustment policy on the data volume under the corresponding transmission condition (including whether the data volume needs to be increased or reduced, an increase or reduction amplitude, and the like) can be determined more explicitly and accurately, thereby making the efficiency higher and the result more accurate.

Optionally, the processor 1010 is further configured to: collect, based on the data volumes of the training data under the transmission conditions, data under the transmission conditions and calibrate the data, to form the training data set under the transmission conditions; or collect specified volumes of data under the transmission conditions, and select, based on the data volumes of the training data under the transmission conditions, partial data from the specified volumes of data and calibrating the partial data, or replenish the specified volumes of data and calibrate replenished data, to form the training data set under the transmission conditions.

Optionally, the processor 1010 is further configured to execute, according to a rule, at least one of operations of reducing a data volume of training data under a transmission condition corresponding to a higher degree of contribution in the sorting and increasing a data volume of training data under a transmission condition corresponding to a lower degree of contribution in the sorting, where the rule includes: that a larger value of the higher degree of contribution indicates a larger amplitude of the reducing; and that a smaller value of the lower degree of contribution indicates a larger amplitude of the increasing.

In this embodiment of this application, data volumes of training data under corresponding transmission conditions are increased or reduced proportionally according to magnitudes of values of degrees of contribution, so that as the degrees of contribution of the transmission conditions are gradually increased, the data volumes of the training data under the transmission conditions are gradually reduced, thereby better balancing impact of the transmission conditions on the final neural network and better facilitating an improvement in the generalization capability of the neural network.

Optionally, the processor 1010 is further configured to determine a reference degree of contribution according to the sorting, and compare a degree of contribution of a transmission condition with the reference degree of contribution; and determine, if the degree of contribution of the transmission condition is greater than the reference degree of contribution, that the degree of contribution of the transmission condition is the higher degree of contribution, and reduce a data volume of training data under the transmission condition, or otherwise, determine that the degree of contribution of the transmission condition is the lower degree of contribution, and increase the data volume of the training data under the transmission condition.

In this embodiment of this application, by determining an intermediate contrast reference quantity of degrees of contribution, it is only necessary to compare another degree of contribution with the contrast reference quantity, to determine according to a comparison result to increase or reduce a data volume under a corresponding transmission condition, so that the algorithm is simple and the operation quantity is small.

Optionally, the processor 1010 is further configured to determine, based on probability densities of the transmission conditions in an actual application, weighting coefficients corresponding to the transmission conditions; and determine, based on the degrees of contribution of the transmission conditions to the optimization objective and with reference to the weighting coefficients, the data volumes of the training data under the transmission conditions.

In this embodiment of this application, designing a weighted term according to an actual probability density of a transmission condition can better adapt to an actual environment.

Optionally, the radio frequency unit 1001 is configured to send the training data set to a target device, where the target device is configured to train the neural network based on the training data set.

In this embodiment of this application, by sending the obtained training data set to the second device different from the current device, data sharing and joint training can be implemented between a plurality of devices, thereby effectively reducing an operation quantity of a single device and effectively improving operation efficiency.

Optionally, the radio frequency unit 1001 is configured to directly send the training data set to the target device, or send the training data set on which specified conversion is performed to the target device; and the processor 1010 is further configured to perform the specified conversion on the training data set, where the specified conversion includes at least one of specific quantization, specific compression, and processing that is performed according to a neural network agreed or configured in advance.

Optionally, the processor 1010 is further configured to perform an operation of wireless transmission based on a neural network model, to implement the wireless transmission, where the neural network model is obtained by performing training by using a training data set in advance, and the training data set is obtained based on the training data set obtaining method according to the foregoing training data set obtaining method embodiments.

In this embodiment of this application, data under a plurality of transmission conditions is selected in different proportions according to degrees of contribution of data under different transmission conditions to an optimization objective (or referred to as an objective function or a loss function) of a neural network, to construct a non-uniformly mixed training data set, and training is performed based on the non-uniformly mixed training data set, to obtain one common neural network that is used for actual wireless transmission under different transmission conditions, so that the neural network obtained through training can achieve higher performance under each transmission condition.

Optionally, the processor 1010 is further configured to perform, based on the training data set in any one of training manners, training to obtain the neural network model, where the training manners include:

centralized training of a single terminal;
centralized training of a single network-side device;
joint distributed training of a plurality of terminals;
joint distributed training of a plurality of network-side devices;
joint distributed training of a single network-side device and a plurality of terminals;
joint distributed training of a plurality of network-side devices and a plurality of terminals; and
joint distributed training of a plurality of network-side devices and a single terminal.

Optionally, the radio frequency unit 1001 is further configured to share, in a process of the distributed training, proportions of the training data under the transmission conditions between bodies executing the distributed training.

In this embodiment of this application, by share proportions of training data between execution bodies, the execution bodies can train the neural network model without sharing their own data, so that a problem that a single device has an insufficient calculation capability or training capability, or data cannot be shared between devices (related to a privacy problem), or cost of transmitting a large volume of data is very large can be resolved.

Optionally, the processor 1010 is further configured, in a case that the distributed training is joint distributed training of a plurality of network-side devices, by any network-side device of the plurality of network-side devices to perform calculation to determine the proportions of the training data under the transmission conditions; and the radio frequency unit 1001 is further configured to send the proportions to other network-side devices different from the any network-side device of the plurality of network-side devices through a first specified type of interface signaling.

Optionally, the processor 1010 is further configured, in a case that the distributed training is joint distributed training of a plurality of terminals, by any terminal of the plurality of terminals to perform calculation to determine the proportions of the training data under the transmission conditions; and

the radio frequency unit 1001 is further configured to send the proportions to other terminals different from the any terminal of the plurality of terminals through a second specified type of interface signaling.

Optionally, the processor 1010 is further configured, in a case that the distributed training is joint distributed training of network-side device(s) and terminal(s), by any network-side device or any terminal of the network-side device(s) and the terminal(s) to perform calculation to determine the proportions of the training data under the transmission conditions; and

the radio frequency unit 1001 is further configured to send the proportions to other network-side devices or terminals different from the any network-side device or the any terminal of the network-side device(s) and the terminal(s) through a third specified type of signaling.

Optionally, the processor 1010 is further configured to obtain real-time data under the transmission conditions and adjust a trained neural network model online based on the real-time data.

In this embodiment of this application, based on completing offline training of the neural network model, online fine-tuning is performed on the trained neural network model, so that the neural network can better adapt to an actual environment.

Optionally, the processor 1010 is further configured to obtain the real-time data under the transmission conditions based on the proportions of the training data under the transmission conditions; and skip, if a proportion of real-time data under any transmission condition of the transmission conditions is greater than a proportion of training data under the any transmission condition, inputting data that is in the real-time data under the any transmission condition and whose proportion is the proportion of the real-time data minus the proportion of the training data under the any transmission condition into the trained neural network model in a process of adjusting the trained neural network model online.

In this embodiment of this application, when the data proportion at the training stage continues to be used, data under the transmission condition exceeding the proportion is not input into the neural network model to perform fine-tuning, so that unbalanced impact of a data volume exceeding the proportion can be avoided.

Optionally, the input unit 1004 is configured to collect data of at least one of a network-side device and a terminal under the transmission conditions online as the real-time data under the transmission conditions; and the processor 1010 is further configured to adjust, based on the data of the at least one of the network-side device and the terminal under the transmission conditions, the trained neural network model online through the network-side device or the terminal.

Optionally, in a case that the communications device is a network-side device, the radio frequency unit 1001 is further configured to obtain the proportions of the training data under the transmission conditions from a network-side device at the training stage through any network-side interface signaling of Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling, or obtain the proportions of the training data under the transmission conditions from a terminal at the training stage through any interface signaling of RRC, PDCCH layer-1 signaling, MAC CE, and SIB; and

in a case that the communications device is a terminal, the radio frequency unit 1001 is further configured to obtain the proportions of the training data under the transmission conditions from a terminal at the training stage through PC5 interface signaling or sidelink interface signaling, or obtain the proportions of the training data under the transmission conditions from a network-side device at the training stage through any signaling of RRC, PDCCH layer-1 signaling, MAC CE, and SIB.

In this embodiment of this application, based on a case that an execution body does not obtain data proportion information at the training stage, the data proportion information is obtained from another execution body through a specified type of interface signaling, so that the data proportion information can be shared at the online fine-tuning stage, to ensure the generalization capability of the neural network.

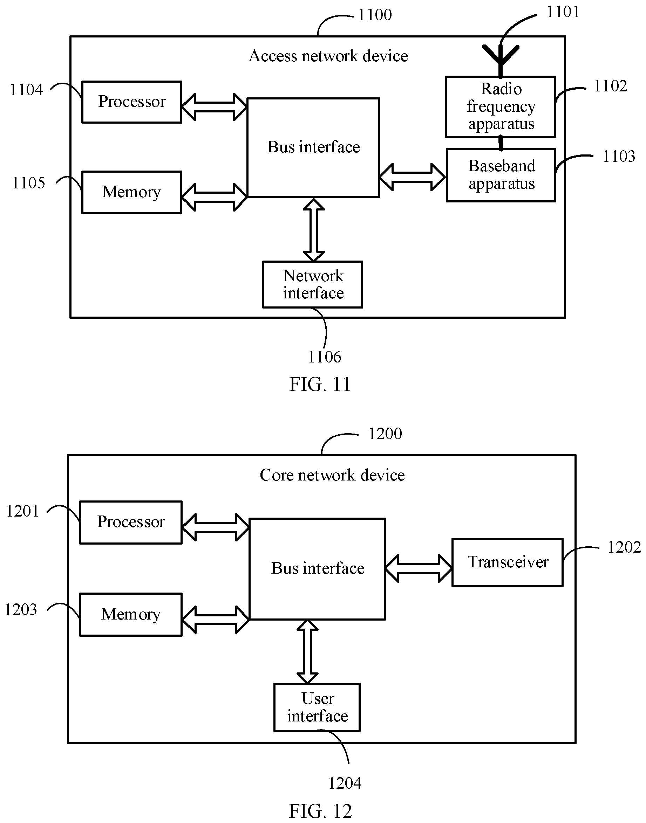

Specifically, FIG. 11 is a schematic diagram of a hardware structure of an access network device according to an embodiment of this application. As shown in FIG. 11, the access network device 1100 includes: an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes information to be sent, and sends the information to the radio frequency apparatus 1102. The radio frequency apparatus 1102 processes the received information and sends the information by using the antenna 1101.

The frequency band processing apparatus may be located in the baseband apparatus 1103. The method performed by the network side device in the foregoing embodiments may be implemented in the baseband apparatus 1103. The baseband apparatus 1103 includes a processor 1104 and a memory 1105.

The baseband apparatus 1103 may include, for example, at least one baseband plate. A plurality of chips are disposed on the baseband plate. As shown in FIG. 11, one of the plurality of chips is, for example, the processor 1104, and is connected to the memory 1105, to invoke a program in the memory 1105 to perform operations of the network-side device in the foregoing method embodiments.

The baseband apparatus 1103 may further include a network interface 1106, configured to exchange information with the radio frequency apparatus 1102. The interface is, for example, a common public radio interface (common public radio interface, CPRI).

Specifically, the access network device in this embodiment of the present invention further includes: an instruction or a program stored in the memory 1105 and executable on the processor 1104. The processor 1104 invokes the instruction or program in the memory 1105 to perform the method performed by the modules shown in FIG. 3 or FIG. 8, and achieve the same technical effect. To avoid repetition, details are not described herein again.

Specifically, FIG. 12 is a schematic diagram of a hardware structure of a core network device according to an embodiment of this application. As shown in FIG. 12, the core network device 1200 includes a processor 1201, a transceiver 1202, a memory 1203, a user interface 1204, and a bus interface.

In this embodiment of this application, the core network device 1200 further includes: a computer program stored in the memory 1203 and executable on the processor 1201. When the computer program is executed by the processor 1201, the method performed by the modules shown in FIG. 3 or FIG. 8 is implemented, and the same technical effect can be achieved. To avoid repetition, details are not described herein again.

In FIG. 12, a bus architecture may include any quantity of interconnected buses and bridges, and specifically connects various circuits that are of one or more processors represented by the processor 1201 and of a memory represented by the memory 1203. The bus architecture may further connect various other circuits of a peripheral, a voltage regulator, a power management circuit, and the like. This is well known in the art, and therefore, no further description is provided in this embodiment of this application. The bus interface provides an interface. The transceiver 1202 may be a plurality of components, including a transmitter and a receiver, and providing units for communicating with various other apparatuses on a transmission medium. For different user equipments, a user interface 1204 may be an interface that can externally or internally connect to a needed device, and the connected device includes but is not limited to a keypad, a display, a loudspeaker, a microphone, and a joystick.

The processor 1201 is responsible for the management of the bus architecture and normal processing, and the memory 1203 may store data used when the processor 1201 performs an operation.

An embodiment of this application further provides a readable storage medium. The readable storage medium stores a program or an instruction. When the program or instruction is executed by a processor, each process of the foregoing training data set obtaining method embodiment is implemented or each process of the foregoing wireless transmission method embodiment is implemented, and the same technical effect can be achieved. To avoid repetition, details are not described herein again.

The processor is a processor in the terminal or network-side device described in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a chip. The chip includes a processor and a communications interface. The communications interface is coupled to the processor. The processor is configured to execute a program or an instruction, to implement each process of the foregoing training data set obtaining method embodiment or implement each process of the foregoing wireless transmission method embodiment, and can achieve the same technical effect. To avoid repetition, details are not described herein again.

It should be noted that, the chip mentioned in the embodiments of this application may also be referred to as a system-level chip, a system chip, a chip system, a system on chip, or the like.

It should be noted that the terms "include", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the range of the method and apparatus in the implementation manners of this application is not limited to performing functions in the shown or discussed order, and may further include performing functions in a basically simultaneous manner or in reverse order according to the involved functions. For example, the described method may be performed in an order different from the described order, and steps may be further added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

**Claims**

1.  A training data set obtaining method, comprising:

    determining, based on degrees of contribution of transmission conditions to an optimization objective of a neural network, data volumes of training data under the transmission conditions; and
    obtaining, based on the data volumes of the training data under the transmission conditions, the training data under the transmission conditions, to form a training data set for training the neural network; wherein
    the degrees of contribution of the transmission conditions to the optimization objective of the neural network represent degrees of impact of the transmission conditions on a value of the optimization objective of the neural network.

2.  The training data set obtaining method according to claim 1, wherein the determining, based on degrees of contribution of transmission conditions to an optimization objective of a neural network, data volumes of training data under the transmission conditions comprises:

    sorting the degrees of contribution of the transmission conditions; and
    executing, based on equal-proportion mixing, at least one of operations of reducing a data volume of training data under a transmission condition corresponding to a higher degree of contribution in the sorting and increasing a data volume of training data under a transmission condition corresponding to a lower degree of contribution in the sorting.

3.  The training data set obtaining method according to claim 1 or 2, wherein types of the transmission conditions comprise at least one of following:

    a signal to noise ratio or a signal to interference plus noise ratio;
    a reference signal received power;
    a signal strength;
    an interference strength;
    a terminal moving speed;
    a channel parameter;
    a distance from a terminal to a base station;
    a cell size;
    a carrier frequency;
    a modulation order or a modulation and coding scheme;
    a cell type;
    an inter-site distance;
    weather and environment factors;
    antenna configuration information of a transmit end or receive end;
    a terminal capability or type; and
    a base station capability or type.

4.  The training data set obtaining method according to claim 1 or 2, wherein the obtaining the training data under the transmission conditions, to form a training data set for training the neural network comprises:

    collecting, based on the data volumes of the training data under the transmission conditions, data under the transmission conditions and calibrating the data, to form the training data set under the transmission conditions; or
    collecting specified volumes of data under the transmission conditions, and selecting, based on the data volumes of the training data under the transmission conditions, partial data from the specified volumes of data and calibrating the partial data, or replenishing the specified volumes of data and calibrating replenished data, to form the training data set under the transmission conditions.

5.  The training data set obtaining method according to claim 2, wherein the executing at least one of operations of reducing a data volume of training data under a transmission condition corresponding to a higher degree of contribution in the sorting and increasing a data volume of training data under a transmission condition corresponding to a lower degree of contribution in the sorting comprises:

executing, according to a rule, at least one of operations of reducing a data volume of training data under a transmission condition corresponding to a higher degree of contribution in the sorting and increasing a data volume of training data under a transmission condition corresponding to a lower degree of contribution in the sorting, wherein the rule comprises: that a larger value of the higher degree of contribution indicates a larger amplitude of the reducing; and that a smaller value of the lower degree of contribution indicates a larger amplitude of the increasing.

6. The training data set obtaining method according to claim 5, wherein in a case that a result of the sorting is an ascending order, the data volumes of the training data under the transmission conditions decrease in a direction of the sorting; and in a case that a result of the sorting is a descending order, the data volumes of the training data under the transmission conditions increase in the direction of the sorting.

7. The training data set obtaining method according to claim 2, wherein the executing at least one of operations of reducing a data volume of training data under a transmission condition corresponding to a higher degree of contribution in the sorting and increasing a data volume of training data under a transmission condition corresponding to a lower degree of contribution in the sorting comprises:

   determining a reference degree of contribution according to the sorting, and comparing a degree of contribution of a transmission condition with the reference degree of contribution; and executing at least one of operations according to a comparison result, wherein the operations comprise:

   determining, if the degree of contribution of the transmission condition is greater than the reference degree of contribution, that the degree of contribution of the transmission condition is the higher degree of contribution, and reducing a data volume of training data under the transmission condition; and determining, if the degree of contribution of the transmission condition is not greater than the reference degree of contribution, that the degree of contribution of the transmission condition is the lower degree of contribution, and increasing the data volume of the training data under the transmission condition.

8. The training data set obtaining method according to claim 7, wherein the reference degree of contribution is a median of the sorting, or a degree of contribution at a specified position in the sorting, or an average of the degrees of contribution in the sorting, or a degree of contribution in the sorting closest to the average.

9. The training data set obtaining method according to any one of claims 1, 2, and 5 to 8, wherein the determining, based on degrees of contribution of transmission conditions to an optimization objective of a neural network, data volumes of training data under the transmission conditions comprises:

   determining, based on probability densities of the transmission conditions in an actual application, weighting coefficients corresponding to the transmission conditions; and determining, based on the degrees of contribution of the transmission conditions to the optimization objective and with reference to the weighting coefficients, the data volumes of the training data under the transmission conditions.

10. The training data set obtaining method according to claim 9, wherein the weighting coefficients and the probability densities are in a function increasing relationship.

11. The training data set obtaining method according to any one of claims 1, 2, 5 to 8, and 10, wherein the method further comprises: sending the training data set to a target device, wherein the target device is configured to train the neural network based on the training data set.

12. The training data set obtaining method according to claim 11, wherein the sending the training data set to a target device comprises: directly sending the training data set to the target device, or sending the training data set on which specified conversion is performed to the target device, wherein the specified conversion comprises at least one of specific quantization, specific compression, and processing that is performed according to a neural network agreed or configured in advance.

13. A training data set obtaining apparatus, comprising:

   a first processing module, configured to determine, based on degrees of contribution of transmission conditions to an optimization objective of a neural network, data volumes of training data under the transmission conditions; and a second processing module, configured to obtain, based on the data volumes of the training data under the transmission conditions, the training data under the transmission conditions, to form a training data set for training the neural network; wherein

the degrees of contribution of the transmission conditions to the optimization objective of the neural network represent degrees of impact of the transmission conditions on a value of the optimization objective of the neural network.

14. The training data set obtaining apparatus according to claim 13, wherein the first processing module is configured to:

sort the degrees of contribution of the transmission conditions; and

execute, based on equal-proportion mixing, at least one of operations of reducing a data volume of training data under a transmission condition corresponding to a higher degree of contribution in the sorting and increasing a data volume of training data under a transmission condition corresponding to a lower degree of contribution in the sorting.

15. The training data set obtaining apparatus according to claim 13 or 14, wherein types of the transmission conditions comprise at least one of following:

a signal to noise ratio or a signal to interference plus noise ratio;
a reference signal received power;
a signal strength;
an interference strength;
a terminal moving speed;
a channel parameter;
a distance from a terminal to a base station;
a cell size;
a carrier frequency;
a modulation order or a modulation and coding scheme;
a cell type;
an inter-site distance;
weather and environment factors;
antenna configuration information of a transmit end or receive end;
a terminal capability or type; and
a base station capability or type.

16. The training data set obtaining apparatus according to claim 13 or 14, wherein the second processing module is configured to:

collect, based on the data volumes of the training data under the transmission conditions, data under the transmission conditions and calibrate the data, to form the training data set under the transmission conditions; or
collect specified volumes of data under the transmission conditions, and select, based on the data volumes of the training data under the transmission conditions, partial data from the specified volumes of data and calibrate the partial data, or replenish the specified volumes of data and calibrate replenished data, to form the training data set under the transmission conditions.

17. The training data set obtaining apparatus according to claim 14, wherein when being configured to execute at least one of operations of reducing a data volume of training data under a transmission condition corresponding to a higher degree of contribution in the sorting and increasing a data volume of training data under a transmission condition corresponding to a lower degree of contribution in the sorting, the first processing module is configured to:
execute, according to a rule, at least one of operations of reducing a data volume of training data under a transmission condition corresponding to a higher degree of contribution in the sorting and increasing a data volume of training data under a transmission condition corresponding to a lower degree of contribution in the sorting, wherein the rule comprises:
that a larger value of the higher degree of contribution indicates a larger amplitude of the reducing; and that a smaller value of the lower degree of contribution indicates a larger amplitude of the increasing.

18. The training data set obtaining apparatus according to claim 17, wherein in a case that a result of the sorting is an ascending order, the data volumes of the training data under the transmission conditions decrease in a direction of the sorting; and in a case that a result of the sorting is a descending order, the data volumes of the training data under the transmission conditions increase in the direction of the sorting.

19. The training data set obtaining apparatus according to claim 14, wherein when being configured to execute at least one of operations of reducing a data volume of training data under a transmission condition corresponding to a higher degree of contribution in the sorting and increasing a data volume of training data under a transmission condition corresponding to a lower degree of contribution in the sorting, the first processing module is configured to:

determine a reference degree of contribution according to the sorting, and compare a degree of contribution of a transmission condition with the reference degree of contribution; and
execute at least one of operations according to a comparison result, wherein the operations comprise:

determining, if the degree of contribution of the transmission condition is greater than the reference degree of contribution, that the degree of contribution of the transmission condition is the higher degree of contribution, and reducing a data volume of training data under the transmission condition; and

determining, if the degree of contribution of the transmission condition is not greater than the reference degree of contribution, that the degree of contribution of the transmission condition is the lower degree of contribution, and increasing the data volume of the training data under the transmission condition.

20. The training data set obtaining apparatus according to claim 19, wherein the reference degree of contribution is a median of the sorting, or a degree of contribution at a specified position in the sorting, or an average of the degrees of contribution in the sorting, or a degree of contribution in the sorting closest to the average.

21. The training data set obtaining apparatus according to any one of claims 13, 14, and 17 to 20, wherein the first processing module is further configured to:

determine, based on probability densities of the transmission conditions in an actual application, weighting coefficients corresponding to the transmission conditions; and
determine, based on the degrees of contribution of the transmission conditions to the optimization objective and with reference to the weighting coefficients, the data volumes of the training data under the transmission conditions.

22. The training data set obtaining apparatus according to claim 21, wherein the weighting coefficients and the probability densities are in a function increasing relationship.

23. The training data set obtaining apparatus according to any one of claims 13, 14, 17 to 20, and 22, wherein the apparatus further comprises:
a sending module, configured to send the training data set to a target device, wherein the target device is configured to train the neural network based on the training data set.

24. The training data set obtaining apparatus according to claim 23, wherein the sending module is configured to:
directly send the training data set to the target device, or send the training data set on which specified conversion is performed to the target device, wherein the specified conversion comprises at least one of specific quantization, specific compression, and processing that is performed according to a neural network agreed or configured in advance.

25. A wireless transmission method, comprising:

performing an operation of wireless transmission based on a neural network model, to implement the wireless transmission, wherein
the neural network model is obtained by performing training by using a training data set in advance, and the training data set is obtained based on the training data set obtaining method according to any one of claims 1 to 12.

26. The wireless transmission method according to claim 25, wherein before the performing an operation of wireless transmission based on a neural network model, the wireless transmission method further comprises:
performing, based on the training data set in any one of training manners, training to obtain the neural network model, wherein the training manners comprise:

centralized training of a single terminal;
centralized training of a single network-side device;
joint distributed training of a plurality of terminals;
joint distributed training of a plurality of network-side devices;
joint distributed training of a single network-side device and a plurality of terminals;
joint distributed training of a plurality of network-side devices and a plurality of terminals; and
joint distributed training of a plurality of network-side devices and a single terminal.

27. The wireless transmission method according to claim 26, wherein a network-side device is an access network device, a core network device, or a data network device.

28. The wireless transmission method according to claim 26 or 27, wherein the wireless transmission method further comprises:
sharing, in a process of a distributed training, proportions of the training data under the transmission conditions between bodies executing the distributed training.

29. The wireless transmission method according to claim 28, wherein in a case that the distributed training is joint distributed training of a plurality of network-side devices, any network-side device of the plurality of network-side devices performs calculation to determine the proportions of the training data under the transmission conditions, and sends the proportions to other network-side devices different from the any network-side device of the plurality of network-side devices through a first specified type of interface signaling.

30. The wireless transmission method according to claim 29, wherein the first specified type of interface signaling comprises Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, or N22 interface signaling.

31. The wireless transmission method according to claim 28, wherein in a case that the distributed training is joint distributed training of a plurality of terminals, any terminal of the plurality of terminals performs calculation to determine the proportions of the training data under the transmission conditions, and sends the proportions to other terminals different from the any terminal of the plurality of terminals through a second specified type of interface signaling.

32. The wireless transmission method according to claim 31, wherein the second specified type of interface signaling comprises PC5 interface signaling or sidelink interface signaling.

33. The wireless transmission method according to claim 28, wherein in a case that the distributed training is joint distributed training of network-side device(s) and terminal(s), any network-side device or any terminal of the network-side device(s) and the terminal(s) performs calculation to determine the proportions of the training data under the transmission conditions, and sends the proportions to other network-side devices or terminals different from the any network-side device or the any terminal of the network-side device(s) and the terminal(s) through a third specified type of signaling.

34. The wireless transmission method according to claim 33, wherein the third specified type of signaling comprises RRC, PDCCH layer-1 signaling, PDSCH, MAC CE, SIB, Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, N22 interface signaling, PUCCH layer-1 signaling, PUSCH, PRACH's MSG1, PRACH's MSG3, PRACH's MSG A, PC5 interface signaling, or sidelink interface signaling.

35. The wireless transmission method according to any one of claims 26, 27, and 29 to 34, further comprising: obtaining real-time data under the transmission conditions and adjusting a trained neural network model online based on the real-time data.

36. The wireless transmission method according to claim 35, wherein the obtaining real-time data under the transmission conditions and adjusting a trained neural network model online based on the real-time data comprises:

obtaining the real-time data under the transmission conditions based on proportions of the training data under the transmission conditions; and skipping, if a proportion of real-time data under any transmission condition of the transmission conditions is greater than a proportion of training data under the any transmission condition, inputting data that is in the real-time data under the any transmission condition and whose proportion is the proportion of the real-time data minus the proportion of the training data under the any transmission condition into the trained neural network model in a process of adjusting the trained neural network model online.

37. The wireless transmission method according to claim 36, wherein the obtaining the real-time data under the transmission conditions comprises:

collecting data of at least one of a network-side device and a terminal under the transmission conditions online as the real-time data under the transmission conditions; and the adjusting the trained neural network model online comprises: adjusting, based on the data of the at least one of the network-side device and the terminal under the transmission conditions, the trained neural network model online through the network-side device or the terminal.

38. The wireless transmission method according to claim 37, wherein in a case that the network-side device or the terminal does not obtain the proportions of the training data under the transmission conditions at a training stage, before the obtaining the real-time data under the transmission conditions based on proportions of the training data under the transmission conditions, the wireless transmission method further comprises:

obtaining, by the network-side device, the proportions of the training data under the transmission conditions from a network-side device at the training stage through any interface signaling of Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling; or obtaining, by the network-side device, the proportions of the training data under the transmission conditions from a terminal at the training stage through any signaling of PUCCH layer-1 signaling, PUSCH, PRACH's MSG1, PRACH's MSG3, and PRACH's MSG A; or obtaining, by the terminal, the proportions of the training data under the transmission conditions from a terminal at the training stage through PC5 interface signaling or sidelink interface signaling; or obtaining, by the terminal, the proportions of the training data under the transmission conditions from a network-side device at the training stage through any signaling of RRC, PDCCH layer-1 signaling, PUSCH, MAC CE, and SIB.

39. A wireless transmission apparatus, comprising:

a third processing module, configured to perform an operation of wireless transmission based on a neural network model, to implement the wireless transmission, wherein the neural network model is obtained by performing training by using a training data set in advance, and the training data set is obtained based on the training data set obtaining method according to any one of claims 1 to 12.

40. The wireless transmission apparatus according to claim 39, wherein the wireless transmission apparatus further comprises:
a training module, configured to perform, based on the training data set in any one of training manners, training to obtain the neural network model, wherein the training manners comprise:

centralized training of a single terminal;
centralized training of a single network-side device;
joint distributed training of a plurality of terminals;
joint distributed training of a plurality of network-side devices;
joint distributed training of a single network-side device and a plurality of terminals;
joint distributed training of a plurality of network-side devices and a plurality of terminals; and
joint distributed training of a plurality of network-side devices and a single terminal.

41. The wireless transmission apparatus according to claim 40, wherein a network-side device is an access network device, a core network device, or a data network device.

42. The wireless transmission apparatus according to claim 40 or 41, wherein the wireless transmission apparatus further comprises:
a fourth processing module, configured to share, in a process of a distributed training, proportions of the training data under the transmission conditions between bodies executing the distributed training.

43. The wireless transmission apparatus according to claim 42, wherein in a case that the distributed training is joint distributed training of a plurality of network-side devices, the fourth processing module is configured by any network-side device of the plurality of network-side devices to perform calculation to determine the proportions of the training data under the transmission conditions, and send the proportions to other network-side devices different from the any network-side device of the plurality of network-side devices through a first specified type of interface signaling.

44. The wireless transmission apparatus according to claim 43, wherein the first specified type of interface signaling comprises Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, or N22 interface signaling.

45. The wireless transmission apparatus according to claim 42, wherein in a case that the distributed training is joint distributed training of a plurality of terminals, the fourth processing module is configured by any terminal of the plurality of terminals to perform calculation to determine the proportions of the training data under the transmission conditions, and send the proportions to other terminals different from the any terminal of the plurality of terminals through a second specified type of interface signaling.

46. The wireless transmission apparatus according to claim 45, wherein the second specified type of interface signaling comprises PC5 interface signaling or sidelink interface signaling.

47. The wireless transmission apparatus according to claim 42, wherein in a case that the distributed training is joint distributed training of network-side device(s) and terminal(s), the fourth processing module is configured by any network-side device or any terminal of the network-side device(s) and the terminal(s) to perform calculation to determine the proportions of the training data under the transmission conditions, and send the proportions to other network-side devices or terminals different from the any network-side device or the any terminal of the network-side device(s) and the terminal(s) through a third specified type of signaling.

48. The wireless transmission apparatus according to claim 47, wherein the third specified type of signaling comprises RRC, PDCCH layer-1 signaling, PDSCH, MAC CE, SIB, Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, N22 interface signaling, PUCCH layer-1 signaling, PUSCH, PRACH's MSG1, PRACH's MSG3, PRACH's MSG A, PC5 interface signaling, or sidelink interface signaling.

49. The wireless transmission apparatus according to any one of claims 40, 41, and 43 to 48, wherein the wireless transmission apparatus further comprises: a fine-tuning module, configured to obtain real-time data under the transmission conditions and adjust a trained neural network model online based on the real-time data.

50. The wireless transmission apparatus according to claim 49, wherein the fine-tuning module is configured to:

   obtain the real-time data under the transmission conditions based on proportions of the training data under the transmission conditions; and skip, if a proportion of real-time data under any transmission condition of the transmission conditions is greater than a proportion of training data under the any transmission condition, inputting data that is in the real-time data under the any transmission condition and whose proportion is the proportion of the real-time data minus the proportion of the training data under the any transmission condition into the trained neural network model in a process of adjusting the trained neural network model online.

51. The wireless transmission apparatus according to claim 50, wherein when being configured to obtain the real-time data under the transmission conditions, the fine-tuning module is configured to:

   collect data of at least one of a network-side device and a terminal under the transmission conditions online as the real-time data under the transmission conditions; and when being configured to adjust the trained neural network model online, the fine-tuning module is configured to:

   adjust, based on the data of the at least one of the network-side device and the terminal under the transmission conditions, the trained neural network model online through the network-side device or the terminal.

52. The wireless transmission apparatus according to claim 51, wherein the wireless transmission apparatus further comprises:

   a communication module, configured, in a case that the network-side device or the terminal does not obtain the proportions of the training data under the transmission conditions at a training stage,
   by the network-side device, to obtain the proportions of the training data under the transmission conditions from a network-side device at the training stage through any interface signaling of Xn interface signaling, N1 interface signaling, N2 interface signaling, N3 interface signaling, N4 interface signaling, N5 interface signaling, N6 interface signaling, N7 interface signaling, N8 interface signaling, N9 interface signaling, N10 interface signaling, N11 interface signaling, N12 interface signaling, N13 interface signaling, N14 interface signaling, N15 interface signaling, and N22 interface signaling; or
   by the network-side device, to obtain the proportions of the training data under the transmission conditions from a terminal at the training stage through any signaling of PUCCH layer-1 signaling, PUSCH, PRACH's MSG1, PRACH's MSG3, and PRACH's MSG A; or
   by the terminal, to obtain the proportions of the training data under the transmission conditions from a terminal at the training stage through PC5 interface signaling or sidelink interface signaling; or
   by the terminal, to obtain the proportions of the training data under the transmission conditions from a network-side device at the training stage through any signaling of RRC, PDCCH layer-1 signaling, PUSCH, MAC CE, and SIB.

53. A communications device, comprising a processor, a memory, and a program or an instruction stored in the memory and executable on the processor, wherein when the program or the instruction is executed by the processor, steps of the training data set obtaining method according to any one of claims 1 to 12 are implemented or steps of the wireless transmission method according to any one of claims 25 to 38 are implemented.

54. A readable storage medium, wherein the readable storage medium stores a program or an instruction, and when the program or the instruction is executed by a processor, steps of the training data set obtaining method according to any one of claims 1 to 12 are implemented or steps of the wireless transmission method according to any one of claims 25 to 38 are implemented.

55. A chip, wherein the chip comprises a processor and a communications interface, the communications interface is coupled to the processor, and the processor is configured to execute a program or an instruction to implement steps of the training data set obtaining method according to any one of claims 1 to 12 or steps of the wireless transmission method according to any one of claims 25 to 38.

1022    Core network device

102

1021

1023

Access network
device

Data network
device

101

Terminal

FIG. 1

Start

Determine, based on degrees of contribution of transmission conditions to an optimization objective of a neural network, data volumes of training data under the transmission conditions    201

Obtain, based on the data volumes of the training data under the transmission conditions, the training data under the transmission conditions, to form a training data set for training the neural network    202

End

FIG. 2

Training data set obtaining apparatus

301 ⌇ First processing module ── Second processing module ⌇ 302

FIG. 3

Start

Perform an operation of wireless transmission based on a neural network model, to implement the wireless transmission ⌇ 401

End

FIG. 4

Start

Mix data under all transmission conditions at an equal proportion

Sort all the transmission conditions according to degrees of contribution to an optimization objective of a neural network

Based on the premise of ensuring that data under all the transmission conditions is plentiful, increase a data volume under a transmission condition with a low degree of contribution, and reduce a data volume under a transmission condition with a high degree of contribution

①

Determine proportions of the data under the transmission conditions, and construct a mixed data set

Offline train the neural network

Perform fine-tuning or fine-tuning in an actual environment

②

End

FIG. 5

Start

Sort all the transmission conditions according to degrees of contribution to an optimization objective, to obtain a middle value of the degrees of contribution

i=1

Whether a degree of contribution of an i-th transmission condition is greater than the middle value of the degrees of contribution

No → Based on the premise of ensuring that data volumes under all transmission conditions are plentiful, increase the data volume under the i-th transmission condition, where an increase amplitude is directly proportional to a difference between the median (middle value) of the degrees of contribution and the degree of contribution of the i-th transmission condition

Yes

i=i+1

No

Based on the premise of ensuring that data volumes under all transmission conditions are plentiful, reduce the data volume under the $i^{th}$ transmission condition, where a reduction amplitude is directly proportional to a difference between the degree of contribution of the i-th transmission condition and the median (middle value) of the degrees of contribution

Whether i is greater than a total quantity of the transmission conditions?

Yes

End

FIG. 6

1 — 1
2 — 2
⋮ — ⋮
N_RE_DMRS — N_RE

FIG. 7

Wireless transmission apparatus

801 〜 | Third processing module |

FIG. 8

900

Communications device

901 〜 | Processor | ⟷ | Memory | 902

FIG. 9

1000

| | | | |
|---|---|---|---|
| 1001 | Radio frequency unit | | Network module · 1002 |
| | | 1010 | |
| 1009 | Memory<br>Application<br>Operating system | Processor | Audio output unit 1003 |
| 1008 | Interface unit | | 1004<br>Input unit<br>Graphics processing unit 10041<br>Microphone 10042 |
| 1007<br>1007<br>10072 | User input unit<br>Touch panel<br>Another input device | | 1006<br>Display unit 1006 1<br>Display panel |
| | | Sensor 1005 | |

FIG. 10

1100

1101

Access network device

1104 — Processor

Radio
frequency
apparatus — 1102

Bus interface

Baseband
apparatus — 1103

1105 — Memory

Network
interface

1106

FIG. 11

1200

Core network device

1201 — Processor

Bus interface

Transceiver — 1202

1203 — Memory

User
interface

1204

FIG. 12

## INTERNATIONAL SEARCH REPORT

| International application No. |
| --- |
| **PCT/CN2022/092144** |

| A. | CLASSIFICATION OF SUBJECT MATTER |
| --- | --- |
| | G06N 3/08(2006.01)i |

According to International Patent Classification (IPC) or to both national classification and IPC

| B. | FIELDS SEARCHED |
| --- | --- |

Minimum documentation searched (classification system followed by classification symbols)

    G06N

Documentation searched other than minimum documentation to the extent that such documents are included in the fields searched

Electronic data base consulted during the international search (name of data base and, where practicable, search terms used)

    CNABS, CNKI, WPABS, DWPI, IEEE, ENTXT, ENTXTC, CNTXT: 传输条件, 神经网络, 优化目标, 损失函数, 贡献, 训练, 数量, 排序, 信噪比, 信干噪比, 信道, 基站, transmission condition, neural network, optimization objective, loss function, contribution, training, quantity, rank, signal-to-noise ratio, signal-to-interference-and-noise ratio, channel, base station

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112329813 A (CENTRAL SOUTH UNIVERSITY) 05 February 2021 (2021-02-05) description, paragraphs 40 and 48-90 and figures 1-4 | 1, 3-4, 11-13, 15-16, 23-28, 39-42, 53-55 |
| A | CN 102625322 A (BEIJING UNIVERSITY OF POSTS AND TELECOMMUNICATIONS) 01 August 2012 (2012-08-01) entire document | 1-55 |
| A | CN 109359166 A (GUANGDONG GUODI PLANNING TECH CO., LTD. et al.) 19 February 2019 (2019-02-19) entire document | 1-55 |
| A | CN 111652381 A (SHENZHEN QIANHAI WEBANK CO., LTD.) 11 September 2020 (2020-09-11) entire document | 1-55 |
| A | US 2021049473 A1 (THE BOARD OF TRUSTEES OF THE LELAND STANFORD JUNIOR UNIVERSITY) 18 February 2021 (2021-02-18) entire document | 1-55 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 July 2022** | **26 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/092144** |

**C.  DOCUMENTS CONSIDERED TO BE RELEVANT**

| Category* | Citation of document, with indication, where appropriate, of the relevant passages | Relevant to claim No. |
|---|---|---|
| A | CN 109472345 A (SHENZHEN BAINUO MINGYIHUI NETWORK TECHNOLOGY CO., LTD.) 15 March 2019 (2019-03-15) entire document | 1-55 |

Form PCT/ISA/210 (second sheet) (January 2015)

## INTERNATIONAL SEARCH REPORT
**Information on patent family members**

International application No.

**PCT/CN2022/092144**

| Patent document cited in search report | | | Publication date (day/month/year) | Patent family member(s) | | | Publication date (day/month/year) |
|---|---|---|---|---|---|---|---|
| CN | 112329813 | A | 05 February 2021 | None | | | |
| CN | 102625322 | A | 01 August 2012 | CN | 102625322 | B | 30 July 2014 |
| CN | 109359166 | A | 19 February 2019 | CN | 109359166 | B | 10 November 2020 |
| CN | 111652381 | A | 11 September 2020 | None | | | |
| US | 2021049473 | A1 | 18 February 2021 | None | | | |
| CN | 109472345 | A | 15 March 2019 | None | | | |

Form PCT/ISA/210 (patent family annex) (January 2015)

**EP 4 339 842 A1**

REFERENCES CITED IN THE DESCRIPTION

**Patent documents cited in the description**

- CN 202110513732